# EUROPEAN PATENT APPLICATION

(11) **EP 3 809 755 A1**
(43) Date of publication of application: **21.04.2021**
(21) Application number: 19830575.7
(22) Date of filing: 02.07.2019
(51) Int. Cl.: H04W 28/22

(54) **COMMUNICATION METHOD AND RELATED DEVICE**

(30) Priority: 02.07.2018 CN 201810710055
(71) Applicant: HUAWEI TECHNOLOGIES CO., LTD., Shenzhen, Guangdong 518129 (CN)
(72) Inventor: XU, Xiaoying, Shenzhen, Guangdong 518129 (CN); YANG, Xudong, Shenzhen, Guangdong 518129 (CN); DAI, Mingzeng, Shenzhen, Guangdong 518129 (CN); ZHAO, Yang, Shenzhen, Guangdong 518129 (CN)
(74) Representative: Gill Jennings & Every LLP
(86) International application number: PCT/CN2019/094422
(87) International publication number: WO 2020/007302

(57) **Abstract**

This application provides a communication method and a related device, and specifically provides a communication rate adjustment method and a related device. The method comprises: receiving, by a distributed network device, first information from a centralized network device, where the first information comprises packet loss information that is of a packet data convergence protocol layer of uplink transmission and that corresponds to a logical channel and/or a second recommended uplink bit rate of the logical channel; and generating, by the distributed network device, a first recommended uplink bit rate of the logical channel based on the first information and sending the first recommended uplink bit rate to a terminal device, where the centralized network device has a radio link control layer function, a media access control layer function, and a physical layer function, and the second network device has a packet data convergence protocol layer function, a service data adaptation protocol layer function, and a radio resource control layer function. Based on the method in this application, the recommended uplink bit rate of the logical channel can be accurately determined in time.

## Description

This application claims priority to Chinese Patent Application No. 201810710055.X, filed with the China National Intellectual Property Administration on July 2, 2018 and entitled "COMMUNICATION METHOD AND RELATED DEVICE", which is incorporated herein by reference in its entirety.

### TECHNICAL FIELD

This application relates to the communications field, and more specifically, to a communication method and a related device.

### BACKGROUND

Similar to voice over LTE (Voice On LTE) in 4G, 5G also supports voice communication. A 5G VoNR technology is used in a growing quantity of scenarios. In addition to voice calls using 5G mobile phones, voice communication further needs to be supported in many internet of things scenarios, such as a 5G IoV, in the future. The European Union requires that an eCall automatic emergency call system needs to be installed in all household vehicles, so that after a traffic accident occurs, the system can automatically call emergency rescue even if a driver and a passenger lose consciousness and cannot make calls.

An LTE system has an access network bitrate recommendation (Access Network Bit-rate Recommendation, ANBR) function. A base station notifies a terminal device of a recommended bit rate by using indication information of a media access control (Media Access Control, MAC) layer. The indication information comprises a logical channel identifier, an uplink indication or a downlink indication, and a recommended bit rate index value. The terminal device requests, by using a media access control control element (Media Access Control Control Element, MAC CE), the base station to recommend a recommended bit rate of a specified logical channel.

The concept of control unit (Control Unit, CU) and the concept of distributed unit (Distributed Unit, DU) are introduced in 5th generation (fifth generation, 5G). A radio access network is further divided, based on protocol layers, into at least one distributed unit and at least one control unit connected to the at least one distributed unit. The distributed unit comprises a radio link control (Radio Link Control, RLC) layer function, a MAC layer function, and a physical (Physical, PHY) layer function. The control unit comprises a packet data convergence protocol (Packet Data Convergence Protocol, PDCP) layer function, a service data adaptation protocol (Service Data Adaptation Protocol, SDAP) layer function, and a radio resource control (Radio Resource Control, RRC) layer function.

### SUMMARY

To design and implement voice communication having high user experience, a problem is how to accurately determine a recommended bit rate of a terminal device in time when a distributed unit and a control unit are separated.

In view of this, this application provides a communication method, a device, a system, and the like, so that in a scenario in which a distributed unit and a control unit are separated, sufficient information can be obtained through mutual cooperation between the distributed unit and the control unit to accurately determine a recommended bit rate of a terminal device in a time, thereby improving user experience.

According to a first aspect, this application provides a communication method, applied to a first network device and including: receiving, by the first network device, first information from a second network device, where the first information comprises packet loss information that is of a packet data convergence protocol layer of uplink transmission and that corresponds to a logical channel and/or a second recommended uplink bit rate of the logical channel; and sending, by the first network device, a first recommended uplink bit rate of the logical channel to a terminal device, where
the first network device has a radio link control layer function, a media access control layer function, and a physical layer function, and the second network device has a packet data convergence protocol layer function, a service data adaptation protocol layer function, and a radio resource control layer function.

With reference to the first aspect, in an implementation of the first aspect, the first recommended uplink bit rate is obtained by the first network device based on the first information.

With reference to the first aspect, in an implementation of the first aspect, the second recommended uplink bit rate is generated by the second network device.

With reference to the first aspect, in an implementation of the first aspect, the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

With reference to the first aspect, in an implementation of the first aspect, the first network device sends a second request to the second network device, where the second request is used to request the second network device to send the first information.

With reference to the first aspect, in an implementation of the first aspect, before the sending, by the first network device, a second request to the second network device, the method comprises: receiving, by the first network device, a first request sent by the terminal device, where the first request is used by the terminal device to obtain the first recommended uplink bit rate of the logical channel.

With reference to the first aspect, in an implementation of the first aspect, the second network device sends the first information to the first network device based on any one of the following:
the packet loss rate that is of the packet data convergence protocol layer of the uplink transmission and that corresponds to the logical channel is greater than a first threshold, or the packet loss rate is greater than the first threshold within a specified time; or the packet loss rate that is of the packet data convergence protocol layer of the uplink transmission and that corresponds to the logical channel is less than a second threshold, or the packet loss rate is less than the second threshold within a specified time; or the quantity of lost packets that is of the packet data convergence protocol layer of the uplink transmission and that corresponds to the logical channel is greater than a third threshold, or the quantity of lost packets is greater than the third threshold within a specified time; or the quantity of lost packets that is of the packet data convergence protocol layer of the uplink transmission and that corresponds to the logical channel is less than a fourth threshold, or the quantity of lost packets is less than the fourth threshold within a specified time; or the second network device receives the second request from the first network device.

According to the method of information exchange and collaborative decision-making between the first network device and the second network device that is provided in the first aspect, a recommended bit rate that is of UE and that is generated by the first network device or the second network device through decision-making is more accurate and timelier.

According to a second aspect, this application provides a communication method, applied to a second network device and including: receiving, by the second network device, second information from a first network device, where the second information comprises any one or more of a quantity of segments that is of a radio link control layer of uplink transmission and that corresponds to a logical channel, load information of a cell in which a terminal device is located, and a third request from the terminal device; and sending, by the second network device, a third recommended uplink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the second aspect, in an implementation of the second aspect, the third recommended uplink bit rate is obtained by the second network device based on the second information.

With reference to the second aspect, in an implementation of the second aspect, packet loss information that is of a media access layer of the uplink transmission and that corresponds to the logical channel comprises a packet loss rate and/or a quantity of lost packets that are/is of the media access layer of the uplink transmission and that correspond/corresponds to the logical channel.

With reference to the second aspect, in an implementation of the second aspect, the load information of the cell in which the terminal device is located comprises a physical resource block usage proportion and/or a control channel element usage proportion of the cell in which the terminal device is located.

With reference to the second aspect, in an implementation of the second aspect, the second network device sends a fourth request to the first network device, where the fourth request is used to request the first network device to send the second information.

With reference to the second aspect, in an implementation of the second aspect, the third request is used to obtain the third recommended uplink bit rate of the logical channel.

With reference to the second aspect, in an implementation of the second aspect, the first network device sends the second information to the second network device based on any one of the following:
the quantity of segments that is of the radio link control layer of the uplink transmission and that corresponds to the logical channel is greater than a fifth threshold, or the quantity of segments is greater than the fifth threshold within a specified time; or the quantity of segments that is of the radio link control layer of the uplink transmission and that corresponds to the logical channel is less than a sixth threshold, or the quantity of segments is less than the sixth threshold within a specified time; or the physical resource block usage proportion of the cell in which the terminal device is located is greater than a seventh threshold, or the physical resource block usage proportion is greater than the seventh threshold within a specified time; or the physical resource block usage proportion of the cell in which the terminal device is located is less than an eighth threshold, or the physical resource block usage proportion is less than the eighth threshold within a specified time; or the control channel element usage proportion of the cell in which the terminal device is located is greater than a ninth threshold, or the control channel element usage proportion is greater than the ninth threshold within a specified time; or the control channel element usage proportion of the cell in which the terminal device is located is less than a tenth threshold, or the control channel element usage proportion is less than the tenth threshold within a specified time; or the first network device receives the third request; or the first network device receives the fourth request.

According to a third aspect, this application provides a communication method, applied to a first network device and including: receiving, by the first network device, third information from a second network device and/or packet loss information that is from a terminal device, that is of a packet data convergence protocol layer of downlink transmission, and that corresponds to a logical channel, where the third information comprises a fifth recommended downlink bit rate of the logical channel; and sending, by the first network device, a fourth recommended downlink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the third aspect, in an implementation of the third aspect, the fourth recommended downlink bit rate is obtained by the first network device based on the third information and/or the packet loss information.

With reference to the third aspect, in an implementation of the third aspect, the fifth recommended downlink bit rate is generated by the second network device.

With reference to the third aspect, in an implementation of the third aspect, the packet loss information that is of the packet data convergence protocol layer of the downlink transmission and that corresponds to the logical channel is a packet loss rate or a quantity of lost packets that is of the packet data convergence protocol layer of the downlink transmission and that corresponds to the logical channel.

With reference to the third aspect, in an implementation of the third aspect, the first network device sends a sixth request to the second network device, where the sixth request is used to request the second network device to send the third information.

With reference to the third aspect, in an implementation of the third aspect, before the sending, by the first network device, a sixth request to the second network device, the method comprises: receiving, by the first network device, a fifth request from the terminal device, where the fifth request is used to obtain the fourth recommended downlink bit rate of the logical channel.

With reference to the third aspect, in an implementation of the third aspect, the second network device sends the third information to the first network device based on any one of the following:
the packet loss rate that is of the packet data convergence protocol layer of the downlink transmission and that corresponds to the logical channel is greater than an eleventh threshold, or the packet loss rate is greater than the eleventh threshold within a specified time; or the packet loss rate that is of the packet data convergence protocol layer of the downlink transmission and that corresponds to the logical channel is less than a twelfth threshold, or the packet loss rate is less than the twelfth threshold within a specified time; or the quantity of lost packets that is of the packet data convergence protocol layer of the downlink transmission and that corresponds to the logical channel is greater than a thirteenth threshold, or the quantity of lost packets is greater than the thirteenth threshold within a specified time; or the quantity of lost packets that is of the packet data convergence protocol layer of the downlink transmission and that corresponds to the logical channel is less than a fourteenth threshold, or the quantity of lost packets is less than the fourteenth threshold within a specified time; or the second network device receives the sixth request from the first network device.

According to a fourth aspect, this application provides a communication method, applied to a second network device and including: receiving, by the second network device, fourth information from a first network device and/or packet loss information, that is from a terminal device, that is of a packet data convergence protocol layer of downlink transmission, and that corresponds to a logical channel, where the fourth information comprises any one or more of packet loss information that is of a media access layer of the downlink transmission and that corresponds to the logical channel, a quantity of segments that is of a radio link control layer of the downlink transmission and that corresponds to the logical channel, load information of a cell in which the terminal device is located, and a seventh request from the terminal device; and sending, by the second network device, a sixth recommended downlink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the fourth aspect, in an implementation of the fourth aspect, the sixth recommended downlink bit rate is obtained by the second network device based on the fourth information and/or the packet loss information.

With reference to the fourth aspect, in an implementation of the fourth aspect, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

With reference to the fourth aspect, in an implementation of the fourth aspect, the packet loss information that is of the media access layer of the downlink transmission and that corresponds to the logical channel comprises a packet loss rate and/or a quantity of lost packets that are/is of the media access layer of the downlink transmission and that correspond/corresponds to the logical channel.

With reference to the fourth aspect, in an implementation of the fourth aspect, the load information of the cell in which the terminal device is located comprises a physical resource block usage proportion and/or a control channel element usage proportion of the cell in which the terminal device is located.

With reference to the fourth aspect, in an implementation of the fourth aspect, the second network device sends an eighth request to the first network device, where the eighth request is used to request the first network device to send the fourth information.

With reference to the fourth aspect, in an implementation of the fourth aspect, the seventh request is used to obtain the sixth recommended downlink bit rate of the logical channel.

With reference to the fourth aspect, in an implementation of the fourth aspect, the first network device sends the fourth information to the second network device based on any one of the following:
the packet loss rate that is of the media access layer of the downlink transmission and that corresponds to the logical channel is greater than a fifteenth threshold, or the packet loss rate is greater than the fifteenth threshold within a specified time; or the packet loss rate that is of the media access layer of the downlink transmission and that corresponds to the logical channel is less than a sixteenth threshold, or the packet loss rate is less than the sixteenth threshold within a specified time; or the quantity of lost packets that is of the media access layer of the downlink transmission and that corresponds to the logical channel is greater than a seventeenth threshold, or the quantity of lost packets is greater than the seventeenth threshold within a specified time; or the quantity of lost packets that is of the media access layer of the downlink transmission and that corresponds to the logical channel is less than an eighteenth threshold, or the quantity of lost packets is less than the eighteenth threshold within a specified time; or the quantity of segments that is of the radio link control layer of the downlink transmission and that corresponds to the logical channel is greater than a nineteenth threshold, or the quantity of segments is greater than the nineteenth threshold within a specified time; or the quantity of segments that is of the radio link control layer of the downlink transmission and that corresponds to the logical channel is less than a twentieth threshold, or the quantity of segments is less than the twentieth threshold within a specified time; or the physical resource block usage proportion of the cell in which the terminal device is located is greater than a twenty-first threshold, or the physical resource block usage proportion is greater than the twenty-first threshold within a specified time; or the physical resource block usage proportion of the cell in which the terminal device is located is less than a twenty-second threshold, or the physical resource block usage proportion is less than the twenty-second threshold within a specified time; or the control channel element usage proportion of the cell in which the terminal device is located is greater than a twenty-third threshold, or the control channel element usage proportion is greater than the twenty-third threshold within a specified time; or the control channel element usage proportion of the cell in which the terminal device is located is less than a twenty-fourth threshold, or the control channel element usage proportion is less than the twenty-fourth threshold within a specified time; or the first network device receives the seventh request; or the first network device receives the packet loss information that is from the terminal device, that is of the packet data convergence protocol layer of the downlink transmission, and that corresponds to the logical channel; or the first network device receives the eighth request from the second network device.

According to a fifth aspect, this application provides a first network device, including: a receiving module, configured to receive first information from a second network device, where the first information comprises packet loss information that is of a packet data convergence protocol layer of uplink transmission and that corresponds to a logical channel and/or a second recommended uplink bit rate of the logical channel; and a sending module, configured to send a first recommended uplink bit rate of the logical channel to a terminal device, where
the first network device has a radio link control layer function, a media access control layer function, and a physical layer function, and the second network device has a packet data convergence protocol layer function, a service data adaptation protocol layer function, and a radio resource control layer function.

With reference to the fifth aspect, in an implementation of the fifth aspect, a processing module is configured to obtain the first recommended uplink bit rate based on the first information.

With reference to the fifth aspect, in an implementation of the fifth aspect, the second recommended uplink bit rate is generated by the second network device.

With reference to the fifth aspect, in an implementation mode of the fifth aspect,
the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

With reference to the fifth aspect, in an implementation of the fifth aspect, the sending module is further configured to send a second request to the second network device, where the second request is used to request the second network device to send the first information.

With reference to the fifth aspect, in an implementation of the fifth aspect, the receiving module is configured to: before the sending module sends the second request to the second network device, receive a first request sent by the terminal device, where the first request is used by the terminal device to obtain the first recommended uplink bit rate of the logical channel.

According to a sixth aspect, this application provides a second network device, including: a sending module, configured to send first information to a first network device, where the first information comprises packet loss information that is of a packet data convergence protocol layer of uplink transmission and that corresponds to a logical channel and/or a second recommended uplink bit rate of the logical channel, where
the first network device has a radio link control layer function, a media access control layer function, and a physical layer function, and the second network device has a packet data convergence protocol layer function, a service data adaptation protocol layer function, and a radio resource control layer function.

With reference to the sixth aspect, in an implementation of the sixth aspect, a receiving module is configured to receive a second request from the first network device.

With reference to the sixth aspect, in an implementation of the sixth aspect, the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

With reference to the sixth aspect, in an implementation of the sixth aspect, the sending module sends the first information to the first network device based on any one of the following:
the packet loss rate that is of the packet data convergence protocol layer of the uplink transmission and that corresponds to the logical channel is greater than a first threshold, or the packet loss rate is greater than the first threshold within a specified time; or the packet loss rate that is of the packet data convergence protocol layer of the uplink transmission and that corresponds to the logical channel is less than a second threshold, or the packet loss rate is less than the second threshold within a specified time; or the quantity of lost packets that is of the packet data convergence protocol layer of the uplink transmission and that corresponds to the logical channel is greater than a third threshold, or the quantity of lost packets is greater than the third threshold within a specified time; or the quantity of lost packets that is of the packet data convergence protocol layer of the uplink transmission and that corresponds to the logical channel is less than a fourth threshold, or the quantity of lost packets is less than the fourth threshold within a specified time; or the receiving module receives the second request from the first network device.

According to a seventh aspect, this application provides a second network device, including: a receiving module, configured to receive second information from a first network device, where the second information comprises any one or more of a quantity of segments that is of a radio link control layer of uplink transmission and that corresponds to a logical channel, load information of a cell in which a terminal device is located, and a third request from the terminal device; and a sending module, configured to send a third recommended uplink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the seventh aspect, in an implementation of the seventh aspect, a processing module is configured to obtain the third recommended uplink bit rate based on the second information.

With reference to the seventh aspect, in an implementation of the seventh aspect, packet loss information that is of a media access layer of the uplink transmission and that corresponds to the logical channel comprises a packet loss rate and/or a quantity of lost packets that are/is of the media access layer of the uplink transmission and that correspond/corresponds to the logical channel.

With reference to the seventh aspect, in an implementation of the seventh aspect, the load information of the cell in which the terminal device is located comprises a physical resource block usage proportion and/or a control channel element usage proportion of the cell in which the terminal device is located.

With reference to the seventh aspect, in an implementation of the seventh aspect, the sending module is further configured to send a fourth request to the first network device, where the fourth request is used to request the first network device to send the second information.

With reference to the seventh aspect, in an implementation of the seventh aspect, the third request is used to obtain the third recommended uplink bit rate of the logical channel.

According to an eighth aspect, this application provides a first network device, including: a sending module, configured to send second information to a second network device, where the second information comprises any one or more of a quantity of segments that is of a radio link control layer of uplink transmission and that corresponds to a logical channel, load information of a cell in which a terminal device is located, and a third request from the terminal device, where
the first network device has a radio link control layer function, a media access control layer function, and a physical layer function, and the second network device has a packet data convergence protocol layer function, a service data adaptation protocol layer function, and a radio resource control layer function.

With reference to the eighth aspect, in an implementation of the eighth aspect, a receiving module is configured to receive the third request and/or a fourth request.

With reference to the eighth aspect, in an implementation of the eighth aspect, load information of the first network device comprises a physical resource block usage proportion and/or a control channel element usage proportion of the cell in which the terminal device is located.

With reference to the eighth aspect, in an implementation of the eighth aspect, the sending module sends the second information to the second network device based on any one of the following:
the quantity of segments that is of the radio link control layer of the uplink transmission and that corresponds to the logical channel is greater than a fifth threshold, or the quantity of segments is greater than the fifth threshold within a specified time; or the quantity of segments that is of the radio link control layer of the uplink transmission and that corresponds to the logical channel is less than a sixth threshold, or the quantity of segments is less than the sixth threshold within a specified time; or the physical resource block usage proportion of the cell in which the terminal device is located is greater than a seventh threshold, or the physical resource block usage proportion is greater than the seventh threshold within a specified time; or the physical resource block usage proportion of the cell in which the terminal device is located is less than an eighth threshold, or the physical resource block usage proportion is less than the eighth threshold within a specified time; or the control channel element usage proportion of the cell in which the terminal device is located is greater than a ninth threshold, or the control channel element usage proportion is greater than the ninth threshold within a specified time; or the control channel element usage proportion of the cell in which the terminal device is located is less than a tenth threshold, or the control channel element usage proportion is less than the tenth threshold within a specified time; or the receiving module receives the third request; or the receiving module receives the fourth request.

With reference to the eighth aspect, in an implementation of the eighth aspect, the third request is used to obtain a third recommended uplink bit rate of the logical channel.

According to a ninth aspect, this application provides a first network device, including: a receiving module, configured to receive third information from a second network device and/or packet loss information, that is from a terminal device, that is of a packet data convergence protocol layer of downlink transmission, and that corresponds to a logical channel, where the third information comprises a fifth recommended downlink bit rate of the logical channel; and a sending module, configured to send a fourth recommended downlink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the ninth aspect, in an implementation of the ninth aspect, a processing module is configured to obtain the fourth recommended downlink bit rate based on the third information and/or the packet loss information.

With reference to the ninth aspect, in an implementation of the ninth aspect, the fifth recommended downlink bit rate is generated by the second network device.

With reference to the ninth aspect, in an implementation of the ninth aspect, the packet loss information that is of the packet data convergence protocol layer of the downlink transmission and that corresponds to the logical channel is a packet loss rate or a quantity of lost packets that is of the packet data convergence protocol layer of the downlink transmission and that corresponds to the logical channel.

With reference to the ninth aspect, in an implementation of the ninth aspect, the sending module is further configured to send a sixth request to the second network device, where the sixth request is used to request the second network device to send the third information.

With reference to the ninth aspect, in an implementation of the ninth aspect, the receiving module is further configured to: before the sending module sends the sixth request to the second network device, receive a fifth request from the terminal device, where the fifth request is used to obtain the fourth recommended downlink bit rate of the logical channel.

According to a tenth aspect, this application provides a second network device, including: a sending module, configured to send, to a first network device, third information and/or packet loss information, that is from a terminal device, that is of a packet data convergence protocol layer of downlink transmission, and that corresponds to a logical channel, where the third information comprises a fifth recommended downlink bit rate of the logical channel, where
the first network device has a radio link control layer function, a media access control layer function, and a physical layer function, and the second network device has a packet data convergence protocol layer function, a service data adaptation protocol layer function, and a radio resource control layer function.

With reference to the tenth aspect, in an implementation of the tenth aspect, a receiving module is configured to receive a sixth request from the first network device.

With reference to the tenth aspect, in an implementation of the tenth aspect, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

With reference to the tenth aspect, in an implementation of the tenth aspect, the sending module sends the third information to the first network device based on any one of the following:
the packet loss rate that is of the packet data convergence protocol layer of the downlink transmission and that corresponds to the logical channel is greater than an eleventh threshold, or the packet loss rate is greater than the eleventh threshold within a specified time; or the packet loss rate that is of the packet data convergence protocol layer of the downlink transmission and that corresponds to the logical channel is less than a twelfth threshold, or the packet loss rate is less than the twelfth threshold within a specified time; or the quantity of lost packets that is of the packet data convergence protocol layer of the downlink transmission and that corresponds to the logical channel is greater than a thirteenth threshold, or the quantity of lost packets is greater than the thirteenth threshold within a specified time; or the quantity of lost packets that is of the packet data convergence protocol layer of the downlink transmission and that corresponds to the logical channel is less than a fourteenth threshold, or the quantity of lost packets is less than the fourteenth threshold within a specified time; or the receiving module receives the sixth request from the first network device.

According to an eleventh aspect, this application provides a second network device, including: a receiving module, configured to receive fourth information from a first network device and/or packet loss information, that is from a terminal device, that is of a packet data convergence protocol layer of downlink transmission, and that corresponds to a logical channel, where the fourth information comprises any one or more of packet loss information that is of a media access layer of the downlink transmission and that corresponds to the logical channel, a quantity of segments that is of a radio link control layer of the downlink transmission and that corresponds to the logical channel, load information of a cell in which the terminal device is located, and a seventh request from the terminal device; and a sending module, configured to send a sixth recommended downlink bit rate of the logical channel to the terminal device, where
the first network device has a radio link control layer function, a media access control layer function, and a physical layer function, and the second network device has a packet data convergence protocol layer function, a service data adaptation protocol layer function, and a radio resource control layer function.

With reference to the eleventh aspect, in an implementation of the eleventh aspect, a processing module is configured to obtain the sixth recommended downlink bit rate based on the fourth information and/or the packet loss information.

With reference to the eleventh aspect, in an implementation of the eleventh aspect, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

With reference to the eleventh aspect, in an implementation of the eleventh aspect, the packet loss information that is of the media access layer of the downlink transmission and that corresponds to the logical channel comprises a packet loss rate and/or a quantity of lost packets that are/is of the media access layer of the downlink transmission and that correspond/corresponds to the logical channel.

With reference to the eleventh aspect, in an implementation of the eleventh aspect, the load information of the cell in which the terminal device is located comprises a physical resource block usage proportion and/or a control channel element usage proportion of the cell in which the terminal device is located.

With reference to the eleventh aspect, in an implementation of the eleventh aspect, the sending module is further configured to send an eighth request to the first network device, where the eighth request is used to request the first network device to send the fourth information.

With reference to the eleventh aspect, in an implementation of the eleventh aspect, the seventh request is used to obtain the sixth recommended downlink bit rate of the logical channel.

According to a twelfth aspect, this application provides a first network device, including: a sending module, configured to send fourth information and/or packet loss information, that is from a terminal device, that is of a packet data convergence protocol layer of downlink transmission, and that corresponds to a logical channel, where the fourth information comprises any one or more of packet loss information that is of a media access layer of the downlink transmission and that corresponds to the logical channel, a quantity of segments that is of a radio link control layer of the downlink transmission and that corresponds to the logical channel, load information of a cell in which the terminal device is located, and a seventh request from the terminal device, where
the first network device has a radio link control layer function, a media access control layer function, and a physical layer function, and the second network device has a packet data convergence protocol layer function, a service data adaptation protocol layer function, and a radio resource control layer function.

With reference to the twelfth aspect, in an implementation of the twelfth aspect, a receiving module is configured to receive the seventh request and/or an eighth request.

With reference to the twelfth aspect, in an implementation of the twelfth aspect, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

With reference to the twelfth aspect, in an implementation of the twelfth aspect, the packet loss information that is of the media access layer of the downlink transmission and that corresponds to the logical channel comprises a packet loss rate and/or a quantity of lost packets that are/is of the media access layer of the downlink transmission and that correspond/corresponds to the logical channel.

With reference to the twelfth aspect, in an implementation of the twelfth aspect, the load information of the cell in which the terminal device is located comprises a physical resource block usage proportion and/or a control channel element usage proportion of the cell in which the terminal device is located.

With reference to the twelfth aspect, in an implementation of the twelfth aspect, the sending module sends the fourth information to the second network device based on any one of the following:
the packet loss rate that is of the media access layer of the downlink transmission and that corresponds to the logical channel is greater than a fifteenth threshold, or the packet loss rate is greater than the fifteenth threshold within a specified time; or the packet loss rate that is of the media access layer of the downlink transmission and that corresponds to the logical channel is less than a sixteenth threshold, or the packet loss rate is less than the sixteenth threshold within a specified time; or the quantity of lost packets that is of the media access layer of the downlink transmission and that corresponds to the logical channel is greater than a seventeenth threshold, or the quantity of lost packets is greater than the seventeenth threshold within a specified time; or the quantity of lost packets that is of the media access layer of the downlink transmission and that corresponds to the logical channel is less than an eighteenth threshold, or the quantity of lost packets is less than the eighteenth threshold within a specified time; or the quantity of segments that is of the radio link control layer of the downlink transmission and that corresponds to the logical channel is greater than a nineteenth threshold, or the quantity of segments is greater than the nineteenth threshold within a specified time; or the quantity of segments that is of the radio link control layer of the downlink transmission and that corresponds to the logical channel is less than a twentieth threshold, or the quantity of segments is less than the twentieth threshold within a specified time; or the physical resource block usage proportion of the cell in which the terminal device is located is greater than a twenty-first threshold, or the physical resource block usage proportion is greater than the twenty-first threshold within a specified time; or the physical resource block usage proportion of the cell in which the terminal device is located is less than a twenty-second threshold, or the physical resource block usage proportion is less than the twenty-second threshold within a specified time; or the control channel element usage proportion of the cell in which the terminal device is located is greater than a twenty-third threshold, or the control channel element usage proportion is greater than the twenty-third threshold within a specified time; or the control channel element usage proportion of the cell in which the terminal device is located is less than a twenty-fourth threshold, or the control channel element usage proportion is less than the twenty-fourth threshold within a specified time; or the receiving module receives the seventh request; or the receiving module receives the packet loss information that is from the terminal device, that is of the packet data convergence protocol layer of the downlink transmission, and that corresponds to the logical channel; or the receiving module receives the eighth request from the second network device.

With reference to the twelfth aspect, in an implementation of the twelfth aspect, the seventh request is used to obtain a sixth recommended downlink bit rate of the logical channel.

According to a thirteenth aspect, this application provides a communications apparatus. The communications apparatus comprises at least one processor and a memory. The memory stores a program instruction, and the program instruction is executed in the at least one processor, to implement a function of the first network device or the second network device according to the first aspect to the fourth aspect.

According to a fourteenth aspect, this application provides a system chip. The system chip is applied to a first network device or a second network device. The system chip comprises at least one processor and a memory. The memory stores a program instruction, and the program instruction is executed in the at least one processor, to implement a function of the first network device or the second network device according to the first aspect to the fourth aspect.

According to a fifteenth aspect, this application provides a communications system. The system comprises the first network device and the second network device according to the fifth aspect to the twelfth aspect.

According to a sixteenth aspect, this application provides a computer storage medium. The computer-readable storage medium stores a program instruction, and when the program instruction is run, a function of the first network device or the second network device according to the first aspect to the fourth aspect is implemented.

According to a seventeenth aspect, this application provides a computer program product. The computer program product comprises a program instruction, and when the program instruction is executed, a function of the first network device or the second network device according to the first aspect to the fourth aspect is implemented.

### BRIEF DESCRIPTION OF DRAWINGS

The accompanying drawings, which are comprised in this specification and constitute a part of this specification, together with this specification show example embodiments, or features and aspects of this application, and are used to explain principles of this application. It is clear that the accompanying drawings in the following descriptions merely show some embodiments of this application, and a person of ordinary skill in the art can derive other drawings from these accompanying drawings without creative efforts.
FIG. 1 is a diagram of a possible network architecture of a communications system according to this application;
FIG. 2 is a flowchart of starting end-to-end downlink rate adjustment according to this application;
FIG. 3 is a flowchart of starting end-to-end uplink rate adjustment according to this application;
FIG. 4 to FIG. 9 each are a schematic flowchart of a communication method according to an embodiment of this application;
FIG. 10 is a schematic block diagram of a network device according to an embodiment of this application;
FIG. 11 is a schematic block diagram of a communications apparatus according to an embodiment of this application; and
FIG. 12 is a schematic block diagram of a system chip according to an embodiment of this application.

### DESCRIPTION OF EMBODIMENTS

The following describes the technical solutions of this application with reference to the accompanying drawings.

In addition, it should be understood that in the descriptions of this application, terms such as "first" and "second" are merely used for differentiation and description, but should not be understood as an indication or implication of relative importance, or should not be understood as an indication or implication of a sequence.

The term "and/or" in this application describes only an association relationship for describing associated objects and represents that three relationships may exist. For example, A and/or B may represent the following three cases: Only A exists, A and B coexist, and only B exists. In addition, the character "/" in this specification usually indicates an "or" relationship between the associated objects.

First, a communications system to which the technical solutions provided in this application are applicable is described.

A terminal device may be user equipment (User Equipment, UE), an access terminal, a subscriber unit, a subscriber station, a mobile station, a mobile station, a remote station, a remote terminal, a mobile device, a user terminal, a terminal, a wireless terminal device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing module connected to a wireless modem, a vehicle-mounted device, a wearable device, a terminal device in a future 5G network, a terminal device in a future evolved public land mobile communications network (Public Land Mobile Network, PLMN), or the like. In the embodiments of this application, UE is used as an example for description; however, a specific implementation form of the terminal device is not limited in the embodiments.

The technical solutions in the embodiments of this application may be applied to various communications systems, for example, a global system for mobile communications (Global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a universal mobile telecommunication system (Universal Mobile Telecommunication System, UMTS), a worldwide interoperability for microwave access (Worldwide interoperability for microwave access, WiMAX) communications system, a 5th generation (5th Generation, 5G) mobile communications system, a new radio (New Radio, NR) system, and another network system that may be used to provide a mobile communications service. This is not limited herein.

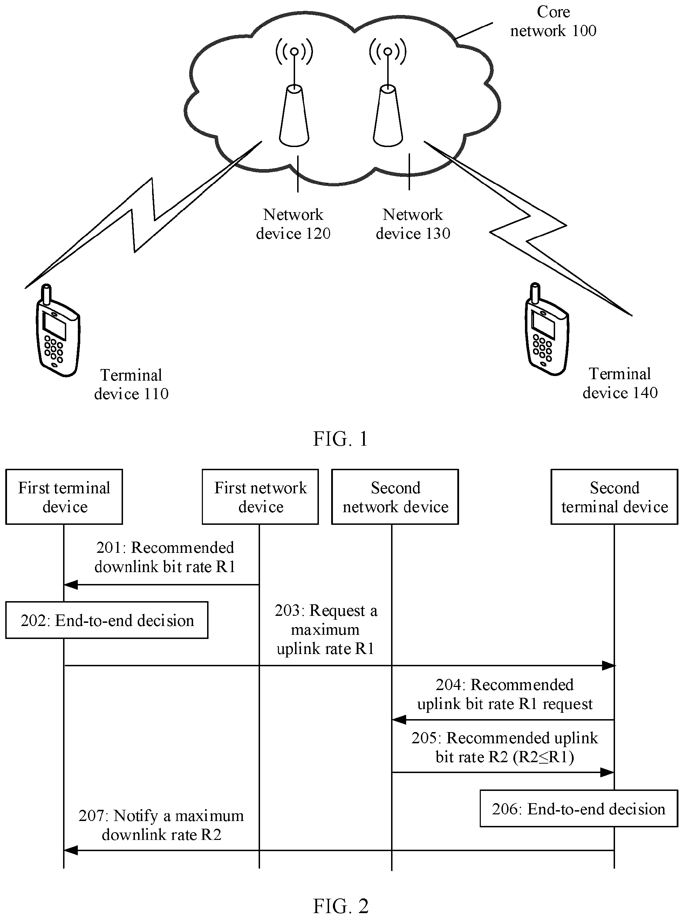

FIG. 1 is an example of a diagram of a possible network architecture of a communications system. The network architecture comprises a core network 100, terminal devices 110 and 140, and network devices 120 and 130. It should be understood that FIG. 1 is merely an example of a diagram of a network architecture. The network architecture further comprises another network element device or functional unit. This is not limited in this application.

The network device may be a device configured to communicate with the terminal device. The network device comprises a base transceiver station (Base Transceiver Station, BTS) in a GSM system or a CDMA system, or may be a NodeB (NodeB, NB) in a wideband code division multiple access (Wideband Code Division Multiple Access, WCDMA) system, or may be an evolved NodeB (evolutional NodeB, eNB or eNodeB) in an LTE system, or may be a wireless controller in a cloud radio access network (Cloud Radio Access Network, CRAN) scenario; or the network device may be a relay station, an access point, a vehicle-mounted device, a wearable device, or a network device, such as an NR NodeB, a gNB, a gNodeB, a CU, or a DU, in a future 5G network, or a network device in a future evolved PLMN. In the embodiments of this application, the CU and the DU are used as an example for description. However, this is not limited in the embodiments of this application.

In the embodiments of this application, load information may be an uplink or a downlink physical resource block (Physical Resource Block, PRB) usage proportion or control channel element (Channel Control Element, CCE) in a cell, or may be a time-frequency resource usage proportion or information about an available PRB/CCE resource on the DU.

Optionally, a terminal device in the accompanying drawings of the embodiments of this application may be a terminal device, a first network device in the accompanying drawings of the embodiments of this application may be a first terminal device, and a second network device in the accompanying drawings of the embodiments of this application may be a second terminal device. In the embodiments of this application, the terminal device may be used to represent the terminal device in the accompanying drawings, the first terminal device may be used to represent the first network device in the accompanying drawings, and the second terminal device may be used to represent the second network device in the accompanying drawings.

Based on the communications system shown above, an end-to-end recommended bit rate adjustment procedure can be implemented. FIG. 2 is a flowchart of starting end-to-end downlink rate adjustment.

Operation 201: A first network device instructs a first terminal device to adjust a downlink rate from a current rate R0 to R1.

Operation 202: The first terminal device makes an end-to-end decision, and requests a maximum uplink rate R1 from a second terminal device only when R1≥R0.

Operation 203: The first terminal device sends, to the second terminal device, information for requesting the maximum uplink rate R1.

A specific function of the information for requesting the maximum uplink rate of R1 is to request the second terminal device to adjust an uplink rate, and a downlink rate value obtained after the adjustment is R1.

Operation 204: The second terminal device sends, to a second network device, information for requesting a recommended uplink bit rate R1.

A specific function of the information for requesting the recommended uplink bit rate R1 is to request the second network device whether to adjust the uplink rate to the maximum value R1.

Operation 205: The second network device instructs, through making a decision, the second terminal device to adjust the uplink rate to R2 (where R2 is less than or equal to R1).

That the second network device makes a decision specifically means that the second network device obtains a recommended bit rate R2 (where R2 is less than or equal to R1) based on radio resource status information of a communications link between the first terminal device and the second terminal device and the information that is for requesting the recommended bit rate and that is sent by the second terminal device. The radio resource status information of the communications link between the first terminal device and the second terminal device specifically comprises one or more factors of a packet loss rate or a quantity of lost packets in an uplink or a downlink, a quantity of segments of RLC, and load information of a cell in which the terminal is located.

Operation 206: The second terminal device makes an end-to-end decision, and notifies the first terminal device of a maximum downlink rate R2 only when R2≤R1.

Operation 207: The second terminal device sends, to the first terminal device, information for notifying the maximum downlink rate R2.

A specific function of the information for notifying the maximum downlink rate R2 is to notify the first terminal device that the second terminal device has adjusted the uplink rate to R2 and requires the first terminal device to adjust the downlink rate to R2.

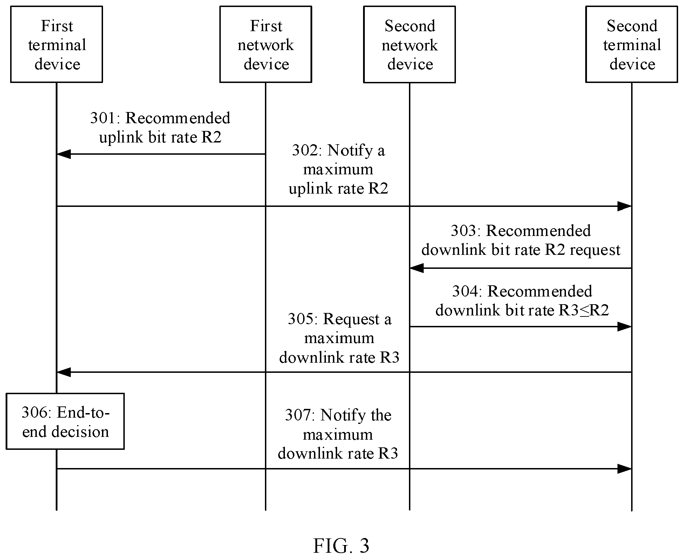

FIG. 3 is a flowchart of starting end-to-end uplink rate adjustment.

Operation 301: A first network device instructs a first terminal device to adjust an uplink rate from a current rate R0 to R2.

Operation 302: The first terminal device sends, to a second terminal device, information for notifying a maximum uplink rate of R2.

Operation 303: The second terminal device sends, to a second network device, information for requesting a recommended downlink bit rate R2.

A specific function of the information for requesting the recommended downlink bit rate R2 is to request the second network device whether to adjust a downlink rate to the maximum value R2.

Operation 304: The second network device instructs, through making a decision, the second terminal device to adjust the downlink rate to R3 (where R3 is less than or equal to R2).

That the second network device makes a decision specifically means that the second network device obtains a recommended bit rate R3 (where R3 is less than or equal to R2) based on radio resource status information of a communications link between the first terminal device and the second terminal device and the information that is for requesting the recommended bit rate and that is sent by the second terminal device. The radio resource status information of the communications link between the first terminal device and the second terminal device specifically comprises one or more factors of a packet loss rate or a quantity of lost packets in an uplink or a downlink, a quantity of segments of RLC, and load information of a cell in which the terminal is located.

Operation 305: The second terminal device sends, to the first terminal device, information for requesting a maximum downlink rate R3.

Operation 306: The first terminal device makes an end-to-end decision, and directly receives the recommended rate R3 only when R3≤R0, without needing to request R3 from the first network device again.

Operation 307: The first terminal device sends, to the second terminal device, information for notifying a maximum uplink rate R3.

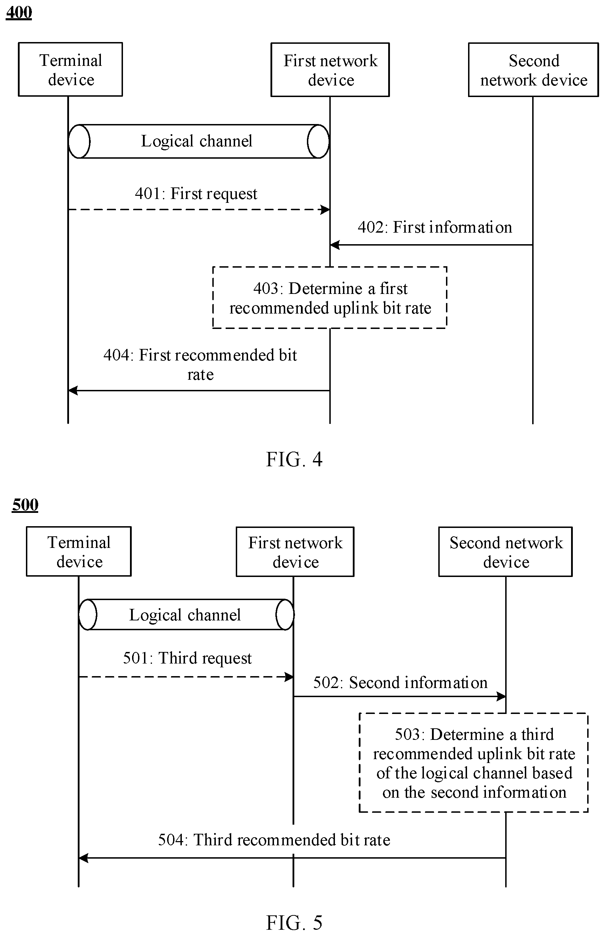

FIG. 4 is a schematic flowchart of a communication method 400 according to an embodiment of this application. The following specifically describes the technical solutions in the embodiments of this application with reference to FIG. 4 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 4 comprises the following steps.

Operation 401: A terminal device sends a first request to a first terminal device.

The first request is used to obtain a first recommended uplink bit rate of a logical channel. The first request may be comprised in a media access control layer control element (Media Access Control control element, MAC CE). The first request may carry a logical channel identifier, an uplink indication or a downlink indication, and a recommended bit rate index value. The first request may be sent by using RRC signaling or MAC CE signaling.

Operation 401 is optional.

Operation 402: A second terminal device sends first information to the first terminal device.

The first information comprises packet loss information that is of a packet data convergence protocol layer of uplink transmission and that corresponds to the logical channel and/or a second recommended uplink bit rate that is of the logical channel and that is determined by the second terminal device. The first information may carry the logical channel identifier, a radio bearer identifier, or a tunnel identifier, where the tunnel identifier is used to identify a tunnel carried by a service of the logical channel or a service of a radio bearer. The first terminal device may determine, based on the logical channel identifier, the radio bearer identifier, or the tunnel identifier in the first information, information about a specific service.

The packet loss information of the uplink packet data convergence protocol layer may comprise a packet loss rate or a quantity of lost packets. The packet loss rate may indicate a total quantity of lost packets within a specified time. The quantity of lost packets may be a quantity of lost packets within a period or a specified time. There are different methods for calculating the period or the specified time. For example, the period or the specified time is a time interval between two times of sending, by the second terminal device, a quantity of lost packets of the uplink packet data convergence protocol layer to the first terminal device. Optionally, the specified time is agreed upon in a protocol, or is configured by a network management system, or is configured by the first terminal device/second terminal device.

In this embodiment of this application, the following several optional manners may be specifically used to describe how to enable the second terminal device to send the first information to the first terminal device:

In an optional manner, the second terminal device periodically sends the first information to the first terminal device.

In an optional manner, when the packet loss rate that is of the packet data convergence protocol layer of the uplink transmission and that corresponds to the logical channel is greater than a first threshold within a specified time, the second terminal device sends the first information to the first terminal device.

In an optional manner, when the packet loss rate that is of the packet data convergence protocol layer of the uplink transmission and that corresponds to the logical channel is less than a second threshold within a specified time, the second terminal device sends the first information to the first terminal device.

In an optional manner, when the quantity of lost packets that is of the packet data convergence protocol layer of the uplink transmission and that corresponds to the logical channel is greater than a third threshold within a specified time, the second terminal device sends the first information to the first terminal device.

In an optional manner, when the quantity of lost packets that is of the packet data convergence protocol layer of the uplink transmission and that corresponds to the logical channel is less than a fourth threshold within a specified time, the second terminal device sends the first information to the first terminal device.

In an optional manner, when the second terminal device receives a second request from the first terminal device, the second terminal device sends the first information to the first terminal device, where the second request is used to request the second terminal device to send the first information.

Optionally, the first threshold, the second threshold, the third threshold, and the fourth threshold are agreed in a protocol, or are configured by a network management system, or are configured by the first terminal device/second terminal device.

The first terminal device sends the second request to the second terminal device in the following optional manners:

In an optional manner, after receiving the first request from the terminal device, the first terminal device sends the second request to the second terminal device.

In an optional manner, the first terminal device forwards, to the second terminal device, the first request sent by the terminal device to the first terminal device. In this case, the second request is equivalent to the first request.

In an optional manner, the first terminal device periodically sends the second request to the second terminal device.

Optionally, the second terminal device and the first terminal device may exchange the second request or the first information through a signaling plane or a user plane.

Operation 403: The first terminal device determines the first recommended uplink bit rate of the logical channel based on the first information sent by the second terminal device.

The first terminal device determines the first recommended uplink bit rate of the logical channel based on any one or more of the first request, a quantity of segments of uplink radio link control RLC, load information of a cell in which the terminal device is located, and the first information.

Operation 403 is optional.

Operation 404: The first terminal device sends the determined first recommended uplink bit rate of the logical channel to the terminal device.

Optionally, the first recommended uplink bit rate may be sent, to the terminal device, together with the logical channel identifier, the uplink or downlink indication, and the recommended bit rate index value. The first recommended uplink bit rate may be sent by using RRC signaling or MAC CE signaling.

FIG. 5 is a schematic flowchart of a communication method 500 according to an embodiment of this application. The following specifically describes the technical solutions in the embodiments of this application with reference to FIG. 5 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 5 comprises the following steps.

Operation 501: A terminal device sends a third request to a first terminal device.

The third request is used to obtain a third recommended uplink bit rate of a logical channel. The third request may be comprised in a MAC CE. The third request may carry a logical channel identifier, an uplink indication or a downlink indication, and a recommended bit rate index value. The third request may be sent by using RRC signaling or MAC CE signaling.

Operation 501 is optional.

Operation 502: The first terminal device sends second information to a second terminal device.

The second information comprises any one or more of a quantity of segments that is of RLC of uplink transmission and that corresponds to the logical channel, load information of a cell in which the terminal device is located, and the third request from the terminal device. The second information may carry the logical channel identifier, a radio bearer identifier, or a tunnel identifier, where the tunnel identifier is used to identify a tunnel carried by a service of the logical channel or a radio bearer. The second terminal device may determine, based on the logical channel identifier, the radio bearer identifier, or the tunnel identifier in the second information, information about the specific service.

In this embodiment of this application, the following several optional manners may be specifically used to describe how to enable the first terminal device to send the second information to the second terminal device:

In an optional manner, the first terminal device periodically sends the second information to the second terminal device.

In an optional manner, when the quantity of segments that is of the radio link control layer of the uplink transmission and that corresponds to the logical channel is greater than a ninth threshold within a specified time, the first terminal device sends the second information to the second terminal device.

In an optional manner, when the quantity of segments that is of the radio link control layer of the uplink transmission and that corresponds to the logical channel is less than a tenth threshold within a specified time, the first terminal device sends the second information to the second terminal device.

In an optional manner, when a physical resource block usage proportion of the cell in which the terminal device is located is greater than an eleventh threshold within a specified time, the first terminal device sends the second information to the second terminal device.

In an optional manner, when the physical resource block usage proportion of the cell in which the terminal device is located is less than a twelfth threshold within a specified time, the first terminal device sends the second information to the second terminal device.

In an optional manner, when a control channel element usage proportion of the cell in which the terminal device is located is greater than a thirteenth threshold within a specified time, the first terminal device sends the second information to the second terminal device.

In an optional manner, when the control channel element usage proportion of the cell in which the terminal device is located is less than a fourteenth threshold within a specified time, the first terminal device sends the second information to the second terminal device.

In an optional manner, when the first terminal device receives the third request, the first terminal device sends the second information to the second terminal device.

In an optional manner, when the first terminal device receives a fourth request, the first terminal device sends the second information to the second terminal device, where the fourth request is used to request the first terminal device to send the second information.

Optionally, the ninth threshold, the tenth threshold, the eleventh threshold, the twelfth threshold, the thirteenth threshold, and the fourteenth threshold are agreed in a protocol, or are configured by a network management system, or are configured by the first terminal device/second terminal device. Optionally, the second terminal device and the first terminal device may exchange the fourth request or the second information through a signaling plane or a user plane.

Operation 503: The second terminal device determines the third recommended uplink bit rate of the logical channel based on the second information sent by the first terminal device.

The second terminal device determines the third recommended uplink bit rate of the logical channel based on packet loss information that is of a packet data convergence protocol layer of the uplink transmission and that corresponds to the logical channel and/or the second information.

Operation 503 is optional.

Operation 504: The second terminal device sends the determined third recommended uplink bit rate of the logical channel to the terminal device.

Optionally, the third recommended uplink bit rate may be sent, to the terminal device, together with the logical channel identifier, the uplink or downlink indication, and the recommended bit rate index value. The third recommended uplink bit rate may be sent by using RRC signaling or MAC CE signaling.

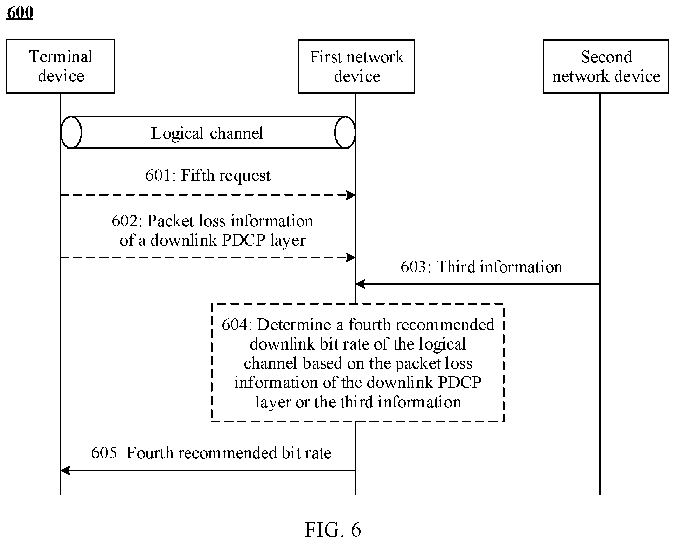

FIG. 6 is a schematic flowchart of a communication method 600 according to an embodiment of this application. The following specifically describes the technical solutions in the embodiments of this application with reference to FIG. 6 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 6 comprises the following steps.

Operation 601: A terminal device sends a fifth request to a first terminal device.

The fifth request is used to obtain a fourth recommended downlink bit rate of a logical channel. The fifth request may be comprised in a MAC CE. The fifth request may carry a logical channel identifier, an uplink indication or a downlink indication, and a recommended bit rate index value. The fifth request may be sent by using RRC signaling or MAC CE signaling.

Operation 601 is optional.

Operation 602: The terminal device sends packet loss information of a downlink PDCP layer to the first terminal device.

In this embodiment of this application, the following several optional manners may be specifically used to describe how to enable the terminal device to send the packet loss information of the downlink PDCP layer to the first terminal device.

In an optional manner, the terminal device periodically sends the packet loss information of the downlink PDCP layer to the first terminal device.

In an optional manner, when a packet loss rate of the downlink PDCP layer of the downlink logical channel is greater than or less than a specified threshold within a specified time, the terminal device actively sends the packet loss information of the downlink PDCP layer to the first terminal device. Optionally, the specified time and the specified threshold are agreed in a protocol, or are configured by a network management system, or are configured by the first terminal device/second terminal device.

In an optional manner, after receiving a network request, the terminal device sends the packet loss information of the downlink PDCP layer to the first terminal device.

The packet loss information of the downlink PDCP layer may be sent by using RRC signaling or MAC CE signaling.

Operation 602 is optional.

Operation 603: A second terminal device sends third information to the first terminal device.

The third information comprises a fifth recommended uplink bit rate that is of the logical channel and that is determined by the second terminal device. The third information may carry the logical channel identifier, a radio bearer identifier, or a tunnel identifier, where the tunnel identifier is used to identify a tunnel carried by a service of the logical channel or a radio bearer. The first terminal device may determine, based on the logical channel identifier, the radio bearer identifier, or the tunnel identifier in the third information, information about the specific service.

The packet loss information of the packet data convergence protocol layer of downlink transmission may comprise a packet loss rate or a quantity of lost packets. The packet loss rate may indicate a total quantity of lost packets within a specified time. The quantity of lost packets may be a quantity of lost packets within a period or a specified time. There are different methods for calculating the period or the specified time. For example, the period or the specified time is a time interval between two times of sending, by the second terminal device, a quantity of lost packets of the packet data convergence protocol layer of the downlink transmission to the first terminal device. Optionally, the specified time is agreed in a protocol, or is configured by a network management system, or is configured by the first terminal device/second terminal device.

In this embodiment of this application, the following several optional manners may be specifically used to describe how to enable the second terminal device to send the third information to the first terminal device:

In an optional manner, the second terminal device periodically sends the third information to the first terminal device.

In an optional manner, when the packet loss rate that is of the packet data convergence protocol layer of the downlink transmission and that corresponds to the logical channel is greater than an eleventh threshold within a specified time, the second terminal device sends the third information to the first terminal device.

In an optional manner, when the packet loss rate that is of the packet data convergence protocol layer of the downlink transmission and that corresponds to the logical channel is less than a twelfth threshold within a specified time, the second terminal device sends the third information to the first terminal device.

In an optional manner, when the quantity of lost packets that is of the packet data convergence protocol layer of the downlink transmission and that corresponds to the logical channel is greater than a thirteenth threshold within a specified time, the second terminal device sends the third information to the first terminal device.

In an optional manner, when the quantity of lost packets that is of the packet data convergence protocol layer of the downlink transmission and that corresponds to the logical channel is less than a fourteenth threshold within a specified time, the second terminal device sends the third information to the first terminal device.

In an optional manner, when the second terminal device receives a sixth request from the first terminal device, the second terminal device sends the third information to the first terminal device, where the sixth request is used to request the second terminal device to send the third information.

Optionally, the eleventh threshold, the twelfth threshold, the thirteenth threshold, and the fourteenth threshold are agreed in a protocol, or are configured by a network management system, or are configured by the first terminal device/second terminal device.

The first terminal device sends the sixth request to the second terminal device in the following optional manners:

In an optional manner, after receiving the fifth request from the terminal device, the first terminal device sends the sixth request to the second terminal device.

In an optional manner, the first terminal device forwards the fifth request from the terminal device to the second terminal device. In this case, the fifth request is equivalent to the sixth request.

In an optional manner, the first terminal device periodically sends the sixth request to the second terminal device.

Optionally, the second terminal device and the first terminal device may exchange the sixth request or the third information through a signaling plane or a user plane.

Operation 604: The first terminal device determines the fourth recommended downlink bit rate of the logical channel based on the third information sent by the second terminal device.

The first terminal device determines the fourth recommended uplink bit rate of the logical channel based on any one or more of the fifth request, a quantity of segments of downlink radio link control RLC, load information of a cell in which the terminal device is located, the third information, and the packet loss information of the downlink PDCP layer.

Operation 604 is optional.

Operation 605: The first terminal device sends the determined fourth recommended downlink bit rate of the logical channel to the terminal device.

Optionally, the fourth recommended downlink bit rate may be sent, to the terminal device, together with the logical channel identifier, the uplink or downlink indication, and the recommended bit rate index value. The fourth recommended downlink bit rate may be sent by using RRC signaling or MAC CE signaling.

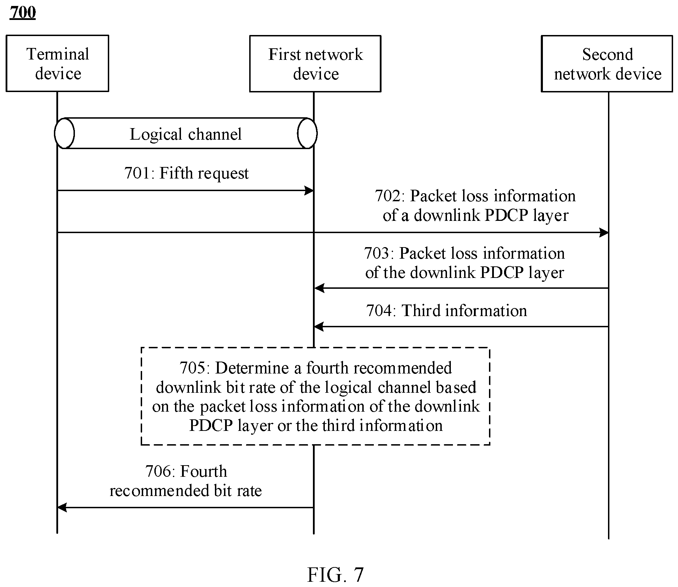

FIG. 7 is a schematic flowchart of a communication method 700 according to an embodiment of this application. The following specifically describes the technical solutions in the embodiments of this application with reference to FIG. 7 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 7 comprises the following steps.

Operation 701: A terminal device sends a fifth request to a first terminal device.

The fifth request is used to obtain a fourth recommended downlink bit rate of a logical channel. The fifth request may be comprised in a media access control layer control element (Media Access Control control element, MAC CE). The fifth request may carry a logical channel identifier, an uplink indication or a downlink indication, and a recommended bit rate index value. The fifth request may be sent by using RRC signaling or MAC CE signaling.

Operation 701 is optional.

Operation 702: The terminal device sends packet loss information of a downlink PDCP layer to a second terminal device.

In this embodiment of this application, the following several optional manners may be specifically used to describe how to enable the terminal device to send the packet loss information of the downlink PDCP layer to the second terminal device.

In an optional manner, the terminal device periodically sends the packet loss information of the downlink PDCP layer to the second terminal device.

In an optional manner, when a packet loss rate of the downlink PDCP layer of the downlink logical channel is greater than or less than a specified threshold within a specified time, the terminal device actively sends the packet loss information of the downlink PDCP layer to the second terminal device. Optionally, the specified time and the specified threshold are agreed in a protocol, or are configured by a network management system, or are configured by the first terminal device/second terminal device.

In an optional manner, after receiving a network request, the terminal device sends the packet loss information of the downlink PDCP layer to the second terminal device.

The packet loss information of the downlink PDCP layer may be sent by using RRC signaling or MAC CE signaling.

Operation 702 is optional.

Operation 703: The second terminal device sends the packet loss information of the downlink PDCP layer to the first terminal device.

Optionally, the second terminal device and the first terminal device may exchange the packet loss information of the downlink PDCP layer through a signaling plane or a user plane.

Operation 703 is optional.

Operations 704 to 706 are the same as operations 603 to 605 in the foregoing embodiment. Operation 705 is optional. Details are not described herein again.

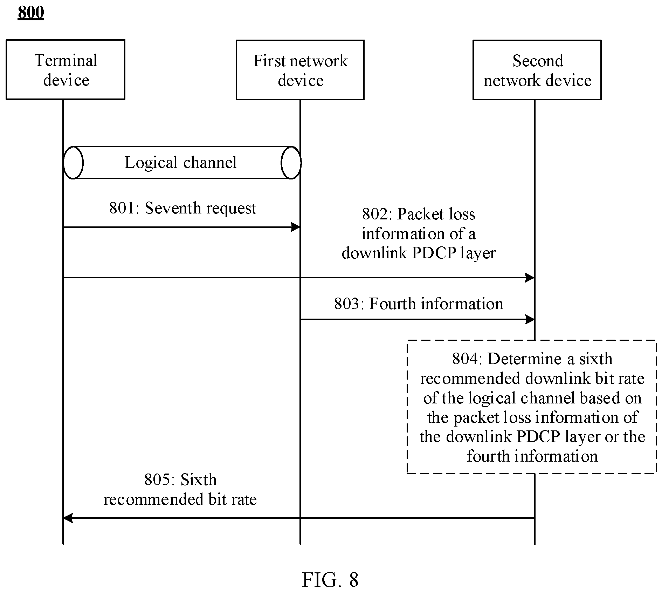

FIG. 8 is a schematic flowchart of a communication method 800 according to an embodiment of this application. The following specifically describes the technical solutions in the embodiments of this application with reference to FIG. 8 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 8 comprises the following steps.

Operation 801: A terminal device sends a seventh request to a first terminal device.

The seventh request is used to obtain a sixth recommended downlink bit rate of a logical channel. The seventh request may be comprised in a media access control layer control element (Media Access Control control element, MAC CE). The seventh request may carry a logical channel identifier, an uplink indication or a downlink indication, and a recommended bit rate index value. The seventh request may be sent by using RRC signaling or MAC CE signaling.

Operation 801 is optional.

Operation 802: The terminal device sends packet loss information of a downlink PDCP layer to a second terminal device.

In this embodiment of this application, the following several optional manners may be specifically used to describe how to enable the terminal device to send the packet loss information of the downlink PDCP layer to the second terminal device.

In an optional manner, the terminal device periodically sends the packet loss information of the downlink PDCP layer to the second terminal device.

In an optional manner, when a packet loss rate of the downlink PDCP layer of the downlink logical channel is greater than or less than a specified threshold within a specified time, the terminal device actively sends the packet loss information of the downlink PDCP layer to the second terminal device. Optionally, the specified time and the specified threshold are agreed in a protocol, or are configured by a network management system, or are configured by the first terminal device/second terminal device.

In an optional manner, after receiving a network request, the terminal device sends the packet loss information of the downlink PDCP layer to the second terminal device.

The packet loss information of the downlink PDCP layer may be sent by using RRC signaling or MAC CE signaling.

Operation 802 is optional.

Operation 803: The first terminal device sends fourth information to the second terminal device.

The fourth information comprises any one or more of a quantity of segments of RLC that is of downlink transmission and that corresponds to the logical channel, load information of a cell in which the terminal device is located, the seventh request from the terminal device, and packet loss information that is of a media access layer of the downlink transmission and that corresponds to the logical channel. The fourth information may carry the logical channel identifier, a radio bearer identifier, or a tunnel identifier, where the tunnel identifier is used to identify a tunnel carried by a service of the logical channel or a radio bearer. The second terminal device may determine, based on the logical channel identifier, the radio bearer identifier, or the tunnel identifier in the second information, information about the specific service.

The packet loss information of the media access layer of the downlink transmission may comprise a packet loss rate or a quantity of lost packets. The packet loss rate may indicate a total quantity of lost packets within a specified time. The quantity of lost packets may be a quantity of lost packets within a period or a specified time. There are different methods for calculating the period or the specified time. For example, the period or the specified time is a time interval between two times of sending, by the second terminal device, a quantity of lost packets of the media access layer of the downlink transmission to the first terminal device. Optionally, the specified time is agreed in a protocol, or is configured by a network management system, or is configured by the first terminal device/second terminal device.

In this embodiment of this application, the following several optional manners may be specifically used to describe how to enable the first terminal device to send the fourth information to the second terminal device:

In an optional manner, the first terminal device periodically sends the fourth information to the second terminal device.

In an optional manner, when the packet loss rate that is of the media access layer of the downlink transmission and that corresponds to the logical channel is greater than a fifteenth threshold within a specified time, the first terminal device sends the fourth information to the second terminal device.

In an optional manner, when the packet loss rate that is of the media access layer of the downlink transmission and that corresponds to the logical channel is less than a sixteenth threshold within a specified time, the first terminal device sends the fourth information to the second terminal device.

In an optional manner, when the quantity of lost packets that is of the media access layer of the downlink transmission and that corresponds to the logical channel is greater than a seventeenth threshold within a specified time, the first terminal device sends the fourth information to the second terminal device.

In an optional manner, when the quantity of lost packets that is of the media access layer of the downlink transmission and that corresponds to the logical channel is less than an eighteenth threshold within a specified time, the first terminal device sends the fourth information to the second terminal device.

In an optional manner, when the quantity of segments that is of the radio link control layer of the downlink transmission and that corresponds to the logical channel is greater than a nineteenth threshold within a specified time, the first terminal device sends the fourth information to the second terminal device.

In an optional manner, when the quantity of segments that is of the radio link control layer of the downlink transmission and that corresponds to the logical channel is less than a twentieth threshold within a specified time, the first terminal device sends the fourth information to the second terminal device.

In an optional manner, when a physical resource block usage proportion of the cell in which the terminal device is located is greater than a twenty-first threshold within a specified time, the first terminal device sends the fourth information to the second terminal device.

In an optional manner, when the physical resource block usage proportion of the cell in which the terminal device is located is less than a twenty-second threshold within a specified time, the first terminal device sends the fourth information to the second terminal device.

In an optional manner, when a control channel element usage proportion of the cell in which the terminal device is located is greater than a twenty-third threshold within a specified time, the first terminal device sends the fourth information to the second terminal device.

In an optional manner, when the control channel element usage proportion of the cell in which the terminal device is located is less than a twenty-fourth threshold within a specified time, the first terminal device sends the fourth information to the second terminal device.

Optionally, the fifteenth threshold to the twenty-fourth threshold are agreed in a protocol, or are configured by a network management system, or are configured by the first terminal device/second terminal device.

In an optional manner, when the first terminal device receives the seventh request or the packet loss information that is from the terminal device, that is of the packet data convergence protocol layer of the downlink transmission, and that corresponds to the logical channel, the first terminal device sends the fourth information to the second terminal device.

In an optional manner, when the first terminal device receives an eighth request from the second terminal device, the first terminal device sends the fourth information to the second terminal device, where the eighth request is used to request the first terminal device to send the fourth information.

Optionally, the second terminal device and the first terminal device may exchange the eighth request or the fourth information through a signaling plane or a user plane.

Operation 804: The second terminal device determines the sixth recommended downlink bit rate of the logical channel based on the fourth information sent by the first terminal device.

The second terminal device determines the sixth recommended downlink bit rate of the logical channel based on the fourth information and/or the packet loss information of the PDCP layer of the downlink transmission.

Operation 804 is optional.

Operation 805: The second terminal device sends the determined sixth recommended downlink bit rate of the logical channel to the terminal device.

Optionally, the sixth recommended downlink bit rate may be sent, to the terminal device, together with the logical channel identifier, the uplink or downlink indication, and the recommended bit rate index value. The sixth recommended downlink bit rate may be sent by using RRC signaling or MAC CE signaling.

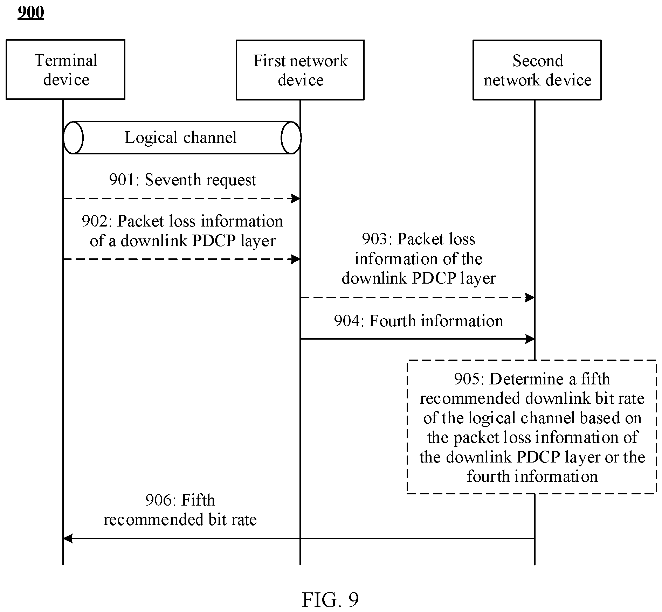

FIG. 9 is a schematic flowchart of a communication method 900 according to an embodiment of this application. The following specifically describes the technical solutions in the embodiments of this application with reference to FIG. 9 in the embodiments of this application. In the accompanying drawings of the embodiments of this application, a terminal device may be a terminal device, a first network device may be a first terminal device, and a second network device may be a second terminal device. In the embodiments of this application, the terminal device is used to represent the terminal device in the accompanying drawings, the first terminal device is used to represent the first network device in the accompanying drawings, and the second terminal device is used to represent the second network device in the accompanying drawings. For example, the communication method corresponding to FIG. 9 comprises the following steps.

Operation 901: A terminal device sends a seventh request to a first terminal device.

The seventh request is used to obtain a sixth recommended downlink bit rate of a logical channel. The seventh request may be comprised in a media access control layer control element (Media Access Control control element, MAC CE). The seventh request may carry a logical channel identifier, an uplink indication or a downlink indication, and a recommended bit rate index value. The seventh request may be sent by using RRC signaling or MAC CE signaling.

Operation 901 is optional.

Operation 902: The terminal device sends packet loss information of a downlink PDCP layer to the first terminal device.

In this embodiment of this application, the following several optional manners may be specifically used to describe how to enable the terminal device to send the packet loss information of the downlink PDCP layer to the first terminal device.

In an optional manner, the terminal device periodically sends the packet loss information of the downlink PDCP layer to the first terminal device.

In an optional manner, when a packet loss rate of the downlink PDCP layer of the downlink logical channel is greater than or less than a specified threshold within a specified time, the terminal device actively sends the packet loss information of the downlink PDCP layer to the first terminal device. Optionally, the specified time and the specified threshold are agreed in a protocol, or are configured by a network management system, or are configured by the first terminal device/a second terminal device.

In an optional manner, after receiving a network request, the terminal device sends the packet loss information of the downlink PDCP layer to the first terminal device.

The packet loss information of the downlink PDCP layer may be sent by using RRC signaling or MAC CE signaling.

Operation 902 is optional.

Operation 903: The first terminal device sends the packet loss information of the downlink PDCP layer to the second terminal device.

Optionally, the second terminal device and the first terminal device may exchange the packet loss information of the downlink PDCP layer through a signaling plane or a user plane.

Operation 903 is optional.

Operations 904 to 906 are the same as operations 803 to 805 in the foregoing embodiment. Operation 905 is optional. Details are not described herein again.

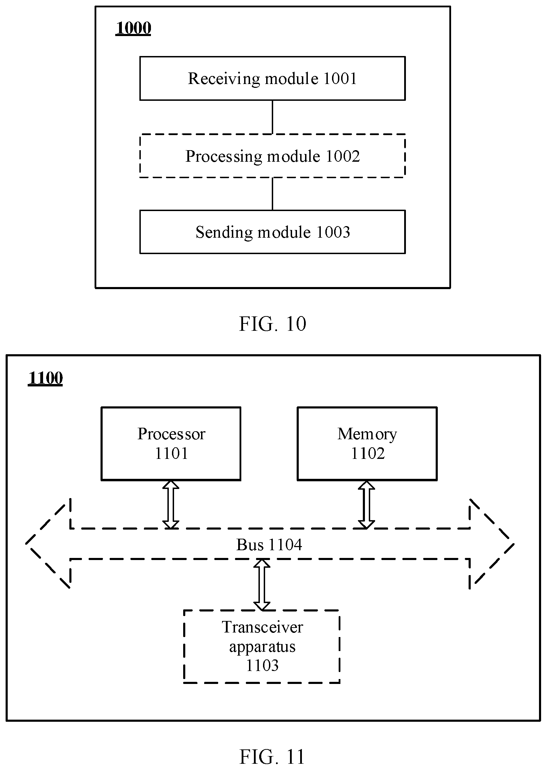

Based on a same technical concept, the embodiments of this application further provide a network device, and an embodiment of this application provides a network device 1000. The following describes a structure and a function of the network device 1000 with reference to FIG. 10. FIG. 10 is a schematic block diagram of the network device 1000 according to this embodiment of this application. As shown in FIG. 10, the network device 1000 comprises at least one receiving module 1001 and a sending module 1003, and optionally comprises a processing module 1002. The network device may perform functions of the methods 400 to 900 in the embodiments of this application. An example is as follows:

This application provides a first network device, including: a receiving module 1001, configured to receive first information from a second network device, where the first information comprises packet loss information that is of a packet data convergence protocol layer of uplink transmission and that corresponds to a logical channel and/or a second recommended uplink bit rate of the logical channel; and a sending module 1003, configured to send a first recommended uplink bit rate of the logical channel to a terminal device, where
the first network device has a radio link control layer function, a media access control layer function, and a physical layer function, and the second network device has a packet data convergence protocol layer function, a service data adaptation protocol layer function, and a radio resource control layer function.

Optionally, a processing module 1002 is configured to obtain the first recommended uplink bit rate based on the first information.

Optionally, the second recommended uplink bit rate is generated by the second network device.

Optionally, the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

Optionally, the sending module 1003 is further configured to send a second request to the second network device, where the second request is used to request the second network device to send the first information.

Optionally, the receiving module 1001 is configured to: before the sending module 1003 sends the second request to the second network device, receive a first request sent by the terminal device, where the first request is used by the terminal device to obtain the first recommended uplink bit rate of the logical channel.

An example is as follows:

This application provides a second network device, including a sending module 1003, configured to send first information to a first network device, where the first information comprises packet loss information that is of a packet data convergence protocol layer of uplink transmission and that corresponds to a logical channel and/or a second recommended uplink bit rate of the logical channel, where the first network device has a radio link control layer function, a media access control layer function, and a physical layer function, and the second network device has a packet data convergence protocol layer function, a service data adaptation protocol layer function, and a radio resource control layer function.

Optionally, the receiving module 1001 is configured to receive a second request from the first network device.

Optionally, the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

Optionally, the sending module 1003 sends the first information to the first network device based on any one of the following:
the packet loss rate that is of the packet data convergence protocol layer of the uplink transmission and that corresponds to the logical channel is greater than a first threshold, or the packet loss rate is greater than the first threshold within a specified time; or the packet loss rate that is of the packet data convergence protocol layer of the uplink transmission and that corresponds to the logical channel is less than a second threshold, or the packet loss rate is less than the second threshold within a specified time; or the quantity of lost packets that is of the packet data convergence protocol layer of the uplink transmission and that corresponds to the logical channel is greater than a third threshold, or the quantity of lost packets is greater than the third threshold within a specified time; or the quantity of lost packets that is of the packet data convergence protocol layer of the uplink transmission and that corresponds to the logical channel is less than a fourth threshold, or the quantity of lost packets is less than the fourth threshold within a specified time; or the receiving module 1001 receives the second request from the first network device.

An example is as follows:

This application provides a second network device, including: a receiving module 1001, configured to receive second information from a first network device, where the second information comprises any one or more of a quantity of segments that is of a radio link control layer of uplink transmission and that corresponds to a logical channel, load information of a cell in which a terminal device is located, and a third request from the terminal device; and a sending module 1003, configured to send a third recommended uplink bit rate of the logical channel to the terminal device, where the first network device has a radio link control layer function, a media access control layer function, and a physical layer function, and the second network device has a packet data convergence protocol layer function, a service data adaptation protocol layer function, and a radio resource control layer function.

Optionally, a processing module 1002 is configured to obtain the third recommended uplink bit rate based on the second information.

Optionally, packet loss information that is of a media access layer of the uplink transmission and that corresponds to the logical channel comprises a packet loss rate and/or a quantity of lost packets that are/is of the media access layer of the uplink transmission and that correspond/corresponds to the logical channel.

Optionally, the load information of the cell in which the terminal device is located comprises a physical resource block usage proportion and/or a control channel element usage proportion of the cell in which the terminal device is located.

Optionally, the sending module 1003 is further configured to send a fourth request to the first network device, where the fourth request is used to request the first network device to send the second information.

Optionally, the third request is used to obtain the third recommended uplink bit rate of the logical channel.

An example is as follows:

This application provides a first network device, including: a sending module 1003, configured to send second information to a second network device, where the second information comprises any one or more of a quantity of segments that is of a radio link control layer of uplink transmission and that corresponds to a logical channel, load information of a cell in which a terminal device is located, and a third request from the terminal device, where the first network device has a radio link control layer function, a media access control layer function, and a physical layer function, and the second network device has a packet data convergence protocol layer function, a service data adaptation protocol layer function, and a radio resource control layer function.

Optionally, a receiving module 1001 is configured to receive the third request and/or a fourth request.

Optionally, load information of the first network device comprises a physical resource block usage proportion and/or a control channel element usage proportion of the cell in which the terminal device is located.

Optionally, the sending module 1003 sends the second information to the second network device based on any one of the following:
the quantity of segments that is of the radio link control layer of the uplink transmission and that corresponds to the logical channel is greater than a fifth threshold, or the quantity of segments is greater than the fifth threshold within a specified time; or the quantity of segments that is of the radio link control layer of the uplink transmission and that corresponds to the logical channel is less than a sixth threshold, or the quantity of segments is less than the sixth threshold within a specified time; or the physical resource block usage proportion of the cell in which the terminal device is located is greater than a seventh threshold, or the physical resource block usage proportion is greater than the seventh threshold within a specified time; or the physical resource block usage proportion of the cell in which the terminal device is located is less than an eighth threshold, or the physical resource block usage proportion is less than the eighth threshold within a specified time; or the control channel element usage proportion of the cell in which the terminal device is located is greater than a ninth threshold, or the control channel element usage proportion is greater than the ninth threshold within a specified time; or the control channel element usage proportion of the cell in which the terminal device is located is less than a tenth threshold, or the control channel element usage proportion is less than the tenth threshold within a specified time; or the receiving module 1001 receives the third request; or the receiving module 1001 receives the fourth request.

Optionally, the third request is used to obtain a third recommended uplink bit rate of the logical channel.

An example is as follows:

This application provides a first network device, including: a receiving module 1001, configured to receive third information from a second network device and/or packet loss information, that is from a terminal device, that is of a packet data convergence protocol layer of downlink transmission, and that corresponds to a logical channel, where the third information comprises a fifth recommended downlink bit rate of the logical channel; and a sending module 1003, configured to send a fourth recommended downlink bit rate of the logical channel to the terminal device, where the first network device has a radio link control layer function, a media access control layer function, and a physical layer function, and the second network device has a packet data convergence protocol layer function, a service data adaptation protocol layer function, and a radio resource control layer function.

Optionally, a processing module 1002 is configured to obtain the fourth recommended downlink bit rate based on the third information and/or the packet loss information.

Optionally, the fifth recommended downlink bit rate is generated by the second network device.

Optionally, the packet loss information that is of the packet data convergence protocol layer of the downlink transmission and that corresponds to the logical channel is a packet loss rate or a quantity of lost packets that is of the packet data convergence protocol layer of the downlink transmission and that corresponds to the logical channel.

Optionally, the sending module 1003 is further configured to send a sixth request to the second network device, where the sixth request is used to request the second network device to send the third information.

Optionally, the receiving module 1001 is further configured to: before the sending module 1003 sends the sixth request to the second network device, receive a fifth request from the terminal device, where the fifth request is used to obtain the fourth recommended downlink bit rate of the logical channel.

An example is as follows:

This application provides a second network device, including: a sending module 1003, configured to send, to a first network device, third information and/or packet loss information, that is from a terminal device, that is of a packet data convergence protocol layer of downlink transmission, and that corresponds to a logical channel, where the third information comprises a fifth recommended downlink bit rate of the logical channel, where the first network device has a radio link control layer function, a media access control layer function, and a physical layer function, and the second network device has a packet data convergence protocol layer function, a service data adaptation protocol layer function, and a radio resource control layer function.

Optionally, a receiving module 1001 is configured to receive a sixth request from the first network device.

Optionally, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

Optionally, the sending module 1003 sends the third information to the first network device based on any one of the following:
the packet loss rate that is of the packet data convergence protocol layer of the downlink transmission and that corresponds to the logical channel is greater than an eleventh threshold, or the packet loss rate is greater than the eleventh threshold within a specified time; or the packet loss rate that is of the packet data convergence protocol layer of the downlink transmission and that corresponds to the logical channel is less than a twelfth threshold, or the packet loss rate is less than the twelfth threshold within a specified time; or the quantity of lost packets that is of the packet data convergence protocol layer of the downlink transmission and that corresponds to the logical channel is greater than a thirteenth threshold, or the quantity of lost packets is greater than the thirteenth threshold within a specified time; or the quantity of lost packets that is of the packet data convergence protocol layer of the downlink transmission and that corresponds to the logical channel is less than a fourteenth threshold, or the quantity of lost packets is less than the fourteenth threshold within a specified time; or the receiving module 1001 receives the sixth request from the first network device.

An example is as follows:

This application provides a second network device, including: a receiving module 1001, configured to receive fourth information from a first network device and/or packet loss information, that is from a terminal device, that is of a packet data convergence protocol layer of downlink transmission, and that corresponds to a logical channel, where the fourth information comprises any one or more of packet loss information that is of a media access layer of the downlink transmission and that corresponds to the logical channel, a quantity of segments that is of a radio link control layer of the downlink transmission and that corresponds to the logical channel, load information of a cell in which the terminal device is located, and a seventh request from the terminal device; and a sending module 1003, configured to send a sixth recommended downlink bit rate of the logical channel to the terminal device, where the first network device has a radio link control layer function, a media access control layer function, and a physical layer function, and the second network device has a packet data convergence protocol layer function, a service data adaptation protocol layer function, and a radio resource control layer function.

Optionally, a processing module 1002 is configured to obtain the sixth recommended downlink bit rate based on the fourth information and/or the packet loss information.

Optionally, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

Optionally, the packet loss information that is of the media access layer of the downlink transmission and that corresponds to the logical channel comprises a packet loss rate and/or a quantity of lost packets that are/is of the media access layer of the downlink transmission and that correspond/corresponds to the logical channel.

Optionally, the load information of the cell in which the terminal device is located comprises a physical resource block usage proportion and/or a control channel element usage proportion of the cell in which the terminal device is located.

Optionally, the sending module 1003 is further configured to send an eighth request to the first network device, where the eighth request is used to request the first network device to send the fourth information.

Optionally, the seventh request is used to obtain the sixth recommended downlink bit rate of the logical channel.

An example is as follows:

This application provides a first network device, including: a sending module 1003, configured to send fourth information and/or packet loss information, that is from a terminal device, that is of a packet data convergence protocol layer of downlink transmission, and that corresponds to a logical channel, where the fourth information comprises any one or more of packet loss information that is of a media access layer of the downlink transmission and that corresponds to the logical channel, a quantity of segments that is of a radio link control layer of the downlink transmission and that corresponds to the logical channel, load information of a cell in which the terminal device is located, and a seventh request from the terminal device, where
the first network device has a radio link control layer function, a media access control layer function, and a physical layer function, and the second network device has a packet data convergence protocol layer function, a service data adaptation protocol layer function, and a radio resource control layer function.

Optionally, a receiving module 1001 is configured to receive the seventh request and/or an eighth request.

Optionally, the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

Optionally, the packet loss information that is of the media access layer of the downlink transmission and that corresponds to the logical channel comprises a packet loss rate and/or a quantity of lost packets that are/is of the media access layer of the downlink transmission and that correspond/corresponds to the logical channel.

Optionally, the load information of the cell in which the terminal device is located comprises a physical resource block usage proportion and/or a control channel element usage proportion of the cell in which the terminal device is located.

Optionally, the sending module 1003 sends the fourth information to the second network device based on any one of the following:
the packet loss rate that is of the media access layer of the downlink transmission and that corresponds to the logical channel is greater than a fifteenth threshold, or the packet loss rate is greater than the fifteenth threshold within a specified time; or the packet loss rate that is of the media access layer of the downlink transmission and that corresponds to the logical channel is less than a sixteenth threshold, or the packet loss rate is less than the sixteenth threshold within a specified time; or the quantity of lost packets that is of the media access layer of the downlink transmission and that corresponds to the logical channel is greater than a seventeenth threshold, or the quantity of lost packets is greater than the seventeenth threshold within a specified time; or the quantity of lost packets that is of the media access layer of the downlink transmission and that corresponds to the logical channel is less than an eighteenth threshold, or the quantity of lost packets is less than the eighteenth threshold within a specified time; or the quantity of segments that is of the radio link control layer of the downlink transmission and that corresponds to the logical channel is greater than a nineteenth threshold, or the quantity of segments is greater than the nineteenth threshold within a specified time; or the quantity of segments that is of the radio link control layer of the downlink transmission and that corresponds to the logical channel is less than a twentieth threshold, or the quantity of segments is less than the twentieth threshold within a specified time; or the physical resource block usage proportion of the cell in which the terminal device is located is greater than a twenty-first threshold, or the physical resource block usage proportion is greater than the twenty-first threshold within a specified time; or the physical resource block usage proportion of the cell in which the terminal device is located is less than a twenty-second threshold, or the physical resource block usage proportion is less than the twenty-second threshold within a specified time; or the control channel element usage proportion of the cell in which the terminal device is located is greater than a twenty-third threshold, or the control channel element usage proportion is greater than the twenty-third threshold within a specified time; or the control channel element usage proportion of the cell in which the terminal device is located is less than a twenty-fourth threshold, or the control channel element usage proportion is less than the twenty-fourth threshold within a specified time; or the receiving module 1001 receives the seventh request; or the receiving module 1001 receives the packet loss information that is from the terminal device, that is of the packet data convergence protocol layer of the downlink transmission, and that corresponds to the logical channel; or the receiving module 1001 receives the eighth request from the second network device.

Optionally, the seventh request is used to obtain the sixth recommended downlink bit rate of the logical channel.

Based on the same technical concept, the embodiments of this application further provide a communications apparatus, configured to implement a function performed by the network device in the foregoing method embodiment. FIG. 11 shows a possible communications apparatus 1100 according to an embodiment of this application. The communications apparatus comprises at least one processor 1101 and a memory 1102, and optionally comprises a transceiver apparatus 1103 and a system bus 1104. The transceiver apparatus 1103 is used by the communications apparatus 1100 to communicate and interact, for example, exchanging control signaling and/or service data, with another communications device (for example, a radio access network device or a terminal device, which is not limited herein). The transceiver apparatus 1103 may be implemented by using a circuit having communication reception and transmission functions. The memory 1102 is configured to store a required program instruction and/or required data. When the at least one processor invokes and executes the program instruction stored in the memory, the communications apparatus is enabled to implement a function of the first terminal device in any design of the methods 400 to 900; or when the at least one processor invokes and executes the program instruction stored in the memory, the communications apparatus is enabled to implement a function of the second terminal device in any design of the methods 400 to 900. The at least one processor 1101, the memory 1102, and the transceiver apparatus 1103 are coupled by using the system bus 1104.

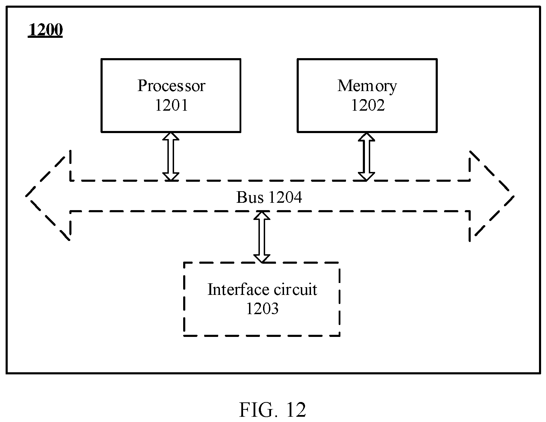

An embodiment of this application provides a system chip 1200. The following describes a structure and a function of the system chip 1200 with reference to FIG. 12. The system chip 1200 may be applied to the foregoing first network device and the foregoing second network device, and a radio access network device can perform, through processing of the system chip, an operation performed by the radio access network device in any possible design solution in the communication method or the communications system provided in the methods 400 to 900 in the embodiments of this application. FIG. 12 is a schematic block diagram of the system chip 1200 according to this embodiment of this application. As shown in FIG. 12, the system chip 1200 comprises at least one processor 1201 and a memory 1202, and optionally comprises an interface circuit 1203 and a bus 1204. The at least one processor 1201, the memory 1202, and the interface circuit 1203 are coupled by using the bus 1204. The system chip 1200 interacts with a radio access network device/another device in a network by using the interface circuit 1203. The memory 1202 stores a program instruction. The at least one processor 1201 invokes the program instruction stored in the memory 1202, so that the first network device and the second network device perform an operation in any possible design solution of the communication method or the communications system provided in the methods 400 to 900 in the embodiments of this application. For brevity, details are not described herein. Optionally, the processor 1201 and the memory 1202 may be combined into a processing apparatus, and the processor 1201 is configured to execute program code stored in the memory 1202 to implement the foregoing functions. During specific implementation, the memory 1202 may alternatively be integrated into the processor 1201, or may be independent of the processor 1201.

In the accompanying drawings of the embodiments of this application, a terminal device may be user equipment UE, a first network device may be a distributed unit DU, and a second network device may be a control unit CU. In the embodiments of this application, the user equipment UE may be used to represent the terminal device, the distributed unit DU may be used to represent the first network device in the accompanying drawings, and the control unit CU may be used to represent the second network device.

According to the communication method and the communications apparatus that are provided in the embodiments of this application, a CU or a DU of a base station in a distributed architecture can accurately determine a recommended bit rate of UE in time, thereby improving user experience.

A person skilled in the art may clearly understand that, for the purpose of convenient and brief description, division of the foregoing functional modules is merely used as an example for description. In an actual application the foregoing functions may be allocated to different functional modules for implementation based on a requirement. That is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

It should be understood that, the processor in the embodiments of this application may be a central processing unit (central processing unit, CPU), or may alternatively be another general purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logical device, a discrete hardware component, or the like. The general purpose processor may be a microprocessor, or the processor may be any conventional processor or the like.

It should further be understood that the memory in the embodiments of this application may be a volatile memory or a nonvolatile memory, or may comprise both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. As examples rather than limitative descriptions, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and comprises several instructions for instructing a computer device (which may be a personal computer, a server, or a network device) or a processor (processor) to perform all or some of the steps of the methods described in the embodiments of this application. The foregoing storage medium comprises any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network device and comprising:
receiving, by the first network device, first information from a second network device, wherein the first information comprises packet loss information and/or a second recommended uplink bit rate of a logical channel, wherein the packet loss information is of a packet data convergence protocol layer of uplink transmission and corresponds to the logical channel; and
sending, by the first network device, a first recommended uplink bit rate of the logical channel to a terminal device, wherein
the first network device has a radio link control layer function, a media access control layer function, and a physical layer function, and the second network device has a packet data convergence protocol layer function, a service data adaptation protocol layer function, and a radio resource control layer function.

2. The method according to claim 1, wherein the first recommended uplink bit rate is obtained by the first network device based on the first information.

3. The method according to claim 1 or 2, wherein the second recommended uplink bit rate is generated by the second network device.

4. The method according to any one of claims 1 to 3, wherein the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

5. The method according to any one of claims 1 to 4, wherein the method comprises:
sending, by the first network device, a second request to the second network device, wherein the second request is used to request the second network device to send the first information.

6. The method according to any one of claims 1 to 5, wherein before the sending, by the first network device, a second request to the second network device, the method comprises:
receiving, by the first network device, a first request sent by the terminal device, wherein the first request is used by the terminal device to obtain the first recommended uplink bit rate of the logical channel.

7. A communication method, applied to a second network device and comprising:
sending, by the second network device, first information to a first network device, wherein the first information comprises packet loss information and/or a second recommended uplink bit rate of a logical channel, wherein the packet loss information is of a packet data convergence protocol layer of uplink transmission and corresponds to the logical channel, wherein
the first network device has a radio link control layer function, a media access control layer function, and a physical layer function, and the second network device has a packet data convergence protocol layer function, a service data adaptation protocol layer function, and a radio resource control layer function.

8. The method according to claim 7, wherein the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

9. The method according to claim 7 or 8, wherein the method comprises:
sending, by the second network device, the first information to the first network device based on any one of the following:
the packet loss rate that is of the packet data convergence protocol layer of the uplink transmission and that corresponds to the logical channel is greater than a first threshold, or the packet loss rate is greater than the first threshold within a specified time; or
the packet loss rate that is of the packet data convergence protocol layer of the uplink transmission and that corresponds to the logical channel is less than a second threshold, or the packet loss rate is less than the second threshold within a specified time; or
the quantity of lost packets that is of the packet data convergence protocol layer of the uplink transmission and that corresponds to the logical channel is greater than a third threshold, or the quantity of lost packets is greater than the third threshold within a specified time; or
the quantity of lost packets that is of the packet data convergence protocol layer of the uplink transmission and that corresponds to the logical channel is less than a fourth threshold, or the quantity of lost packets is less than the fourth threshold within a specified time; or
the second network device receives a second request from the first network device.

10. A communication method, applied to a first network device and comprising:
receiving, by the first network device, third information from a second network device and/or packet loss information that is from a terminal device, that is of a packet data convergence protocol layer of downlink transmission, and that corresponds to a logical channel, wherein the third information comprises a fifth recommended downlink bit rate of the logical channel; and
sending, by the first network device, a fourth recommended downlink bit rate of the logical channel to the terminal device, wherein
the first network device has a radio link control layer function, a media access control layer function, and a physical layer function, and the second network device has a packet data convergence protocol layer function, a service data adaptation protocol layer function, and a radio resource control layer function.

11. The method according to claim 10, wherein the fourth recommended downlink bit rate is obtained by the first network device based on the third information and/or the packet loss information.

12. The method according to claim 10 or 11, wherein the fifth recommended downlink bit rate is generated by the second network device.

13. The method according to any one of claims 10 to 12, wherein the packet loss information that is of the packet data convergence protocol layer of the downlink transmission and that corresponds to the logical channel is a packet loss rate or a quantity of lost packets that is of the packet data convergence protocol layer of the downlink transmission and that corresponds to the logical channel.

14. The method according to any one of claims 10 to 13, wherein the method comprises:
sending, by the first network device, a sixth request to the second network device, wherein the sixth request is used to request the second network device to send the third information.

15. The method according to any one of claims 10 to 14, wherein before the sending, by the first network device, a sixth request to the second network device, the method comprises:
receiving, by the first network device, a fifth request from the terminal device, wherein the fifth request is used to obtain the fourth recommended downlink bit rate of the logical channel.

16. A communication method, applied to a second network device and comprising:
sending, by the second network device to a first network device, third information and/or packet loss information that is from a terminal device, that is of a packet data convergence protocol layer of downlink transmission, and that corresponds to a logical channel, wherein the third information comprises a fifth recommended downlink bit rate of the logical channel, wherein
the first network device has a radio link control layer function, a media access control layer function, and a physical layer function, and the second network device has a packet data convergence protocol layer function, a service data adaptation protocol layer function, and a radio resource control layer function.

17. The method according to claim 16, wherein the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

18. The method according to claim 16 or 17, wherein the method comprises:
sending, by the second network device, the third information to the first network device based on any one of the following:
the packet loss rate that is of the packet data convergence protocol layer of the downlink transmission and that corresponds to the logical channel is greater than an eleventh threshold, or the packet loss rate is greater than the eleventh threshold within a specified time; or
the packet loss rate that is of the packet data convergence protocol layer of the downlink transmission and that corresponds to the logical channel is less than a twelfth threshold, or the packet loss rate is less than the twelfth threshold within a specified time; or
the quantity of lost packets that is of the packet data convergence protocol layer of the downlink transmission and that corresponds to the logical channel is greater than a thirteenth threshold, or the quantity of lost packets is greater than the thirteenth threshold within a specified time; or
the quantity of lost packets that is of the packet data convergence protocol layer of the downlink transmission and that corresponds to the logical channel is less than a fourteenth threshold, or the quantity of lost packets is less than the fourteenth threshold within a specified time; or
the second network device receives a sixth request from the first network device.

19. A first network device, comprising:
a receiving module, configured to receive first information from a second network device, wherein the first information comprises packet loss information and/or a second recommended uplink bit rate of a logical channel, wherein the packet loss information is of a packet data convergence protocol layer of uplink transmission and corresponds to the logical channel; and
a sending module, configured to send a first recommended uplink bit rate of the logical channel to a terminal device, wherein
the first network device has a radio link control layer function, a media access control layer function, and a physical layer function, and the second network device has a packet data convergence protocol layer function, a service data adaptation protocol layer function, and a radio resource control layer function.

20. The first network device according to claim 19, wherein the first network device comprises:
a processing module, configured to obtain the first recommended uplink bit rate based on the first information.

21. The first network device according to claim 19 or 20, wherein the second recommended uplink bit rate is generated by the second network device.

22. The first network device according to any one of claims 19 to 21, wherein the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

23. The first network device according to any one of claims 19 to 22, wherein the first network device comprises:
the sending module is further configured to send a second request to the second network device, wherein the second request is used to request the second network device to send the first information.

24. The first network device according to any one of claims 19 to 23, wherein the first network device comprises:
the receiving module is configured to: before the sending module sends the second request to the second network device, receive a first request sent by the terminal device, wherein the first request is used by the terminal device to obtain the first recommended uplink bit rate of the logical channel.

25. A second network device, comprising:
a sending module, configured to send first information to a first network device, wherein the first information comprises packet loss information and/or a second recommended uplink bit rate of a logical channel, wherein the packet loss information is of a packet data convergence protocol layer of uplink transmission and corresponds to the logical channel, wherein
the first network device has a radio link control layer function, a media access control layer function, and a physical layer function, and the second network device has a packet data convergence protocol layer function, a service data adaptation protocol layer function, and a radio resource control layer function.

26. The second network device according to claim 25, wherein the second network device comprises:
a receiving module, configured to receive a second request from the first network device.

27. The second network device according to claim 25 or 26, wherein the packet loss information that is of the packet data convergence protocol layer of the uplink transmission and that corresponds to the logical channel comprises a packet loss rate and/or a quantity of lost packets that are/is of the packet data convergence protocol layer of the uplink transmission and that correspond/corresponds to the logical channel.

28. The second network device according to any one of claims 25 to 27, wherein
the sending module sends the first information to the first network device based on any one of the following:
the packet loss rate that is of the packet data convergence protocol layer of the uplink transmission and that corresponds to the logical channel is greater than a first threshold, or the packet loss rate is greater than the first threshold within a specified time; or
the packet loss rate that is of the packet data convergence protocol layer of the uplink transmission and that corresponds to the logical channel is less than a second threshold, or the packet loss rate is less than the second threshold within a specified time; or
the quantity of lost packets that is of the packet data convergence protocol layer of the uplink transmission and that corresponds to the logical channel is greater than a third threshold, or the quantity of lost packets is greater than the third threshold within a specified time; or
the quantity of lost packets that is of the packet data convergence protocol layer of the uplink transmission and that corresponds to the logical channel is less than a fourth threshold, or the quantity of lost packets is less than the fourth threshold within a specified time; or
the receiving module receives the second request from the first network device.

29. A first network device, comprising:
a receiving module, configured to receive third information from a second network device and/or packet loss information that is from a terminal device, that is of a packet data convergence protocol layer of downlink transmission, and that corresponds to a logical channel, wherein the third information comprises a fifth recommended downlink bit rate of the logical channel; and
a sending module, configured to send a fourth recommended downlink bit rate of the logical channel to the terminal device, wherein
the first network device has a radio link control layer function, a media access control layer function, and a physical layer function, and the second network device has a packet data convergence protocol layer function, a service data adaptation protocol layer function, and a radio resource control layer function.

30. The first network device according to claim 29, wherein the first network device comprises:
a processing module, configured to obtain the fourth recommended downlink bit rate based on the third information and/or the packet loss information.

31. The first network device according to claim 29 or 30, wherein the fifth recommended downlink bit rate is generated by the second network device.

32. The first network device according to any one of claims 29 to 31, wherein the packet loss information that is of the packet data convergence protocol layer of the downlink transmission and that corresponds to the logical channel is a packet loss rate or a quantity of lost packets that is of the packet data convergence protocol layer of the downlink transmission and that corresponds to the logical channel.

33. The first network device according to any one of claims 29 to 32, wherein the first network device comprises:
the sending module is further configured to send a sixth request to the second network device, wherein the sixth request is used to request the second network device to send the third information.

34. The first network device according to any one of claims 29 to 33, wherein the first network device comprises:
the receiving module is further configured to: before the sending module sends the sixth request to the second network device, receive a fifth request from the terminal device, wherein the fifth request is used to obtain the fourth recommended downlink bit rate of the logical channel.

35. A second network device, comprising:
a sending module, configured to send, to a first network device, third information and/or packet loss information that is from a terminal device, that is of a packet data convergence protocol layer of downlink transmission, and that corresponds to a logical channel, wherein the third information comprises a fifth recommended downlink bit rate of the logical channel, wherein
the first network device has a radio link control layer function, a media access control layer function, and a physical layer function, and the second network device has a packet data convergence protocol layer function, a service data adaptation protocol layer function, and a radio resource control layer function.

36. The second network device according to claim 35, wherein the second network device comprises:
a receiving module, configured to receive a sixth request from the first network device.

37. The second network device according to claim 35 or 36, wherein the packet loss information that is of the packet data convergence protocol layer of the downlink transmission and that corresponds to the logical channel comprises a packet loss rate and/or a quantity of lost packets that are/is of the packet data convergence protocol layer of the downlink transmission and that correspond/corresponds to the logical channel.

38. The second network device according to any one of claims 35 to 37, wherein the second network device comprises:
the sending module sends the third information to the first network device based on any one of the following:
the packet loss rate that is of the packet data convergence protocol layer of the downlink transmission and that corresponds to the logical channel is greater than an eleventh threshold, or the packet loss rate is greater than the eleventh threshold within a specified time; or
the packet loss rate that is of the packet data convergence protocol layer of the downlink transmission and that corresponds to the logical channel is less than a twelfth threshold, or the packet loss rate is less than the twelfth threshold within a specified time; or
the quantity of lost packets that is of the packet data convergence protocol layer of the downlink transmission and that corresponds to the logical channel is greater than a thirteenth threshold, or the quantity of lost packets is greater than the thirteenth threshold within a specified time; or
the quantity of lost packets that is of the packet data convergence protocol layer of the downlink transmission and that corresponds to the logical channel is less than a fourteenth threshold, or the quantity of lost packets is less than the fourteenth threshold within a specified time; or
the receiving module receives the sixth request from the first network device.

39. A communications apparatus, wherein the communications apparatus comprises:
at least one processor and a memory, wherein
the memory stores a program instruction, and the program instruction is executed in the at least one processor, to implement a function of the first network device or the second network device in the method according to any one of claims 1 to 18.

40. A system chip, wherein the system chip is applied to a first network device or a second network device, and the system chip comprises:
at least one processor and a memory, wherein
the memory stores a program instruction, and the program instruction is executed in the at least one processor, to implement a function of the first network device or the second network device in the method according to any one of claims 1 to 18.

41. A communications system, wherein the system comprises:
the first network device and the second network device according to any one of claims 19 to 38.

42. A computer storage medium, wherein the computer-readable storage medium stores a program instruction, and when the program instruction is run, a function of the first network device or the second network device in the method according to any one of claims 1 to 18 is implemented.

43. A computer program product, wherein the computer program product comprises a program instruction, and when the program instruction is executed, a function of the first network device or the second network device in the method according to any one of claims 1 to 18 is implemented.
